Europäisches Patentamt

European Patent Office

Office européen des brevets

(11) Numéro de publication: **0 311 470 B1**

# FASCICULE DE BREVET EUROPEEN

(45) Date de publication de fascicule du brevet: **16.12.92**   (51) Int. Cl.5: **G07F 7/10, H04L 9/00**

(21) Numéro de dépôt: **88402231.0**

(22) Date de dépôt: **05.09.88**

(54) **Procédés et systèmes d'authentification d'accréditations ou de messages à apport nul de connaissance et de signature de messages.**

(30) Priorité: **07.09.87 FR 8712366**

(43) Date de publication de la demande:
**12.04.89 Bulletin 89/15**

(45) Mention de la délivrance du brevet:
**16.12.92 Bulletin 92/51**

(84) Etats contractants désignés:
**AT BE CH DE ES FR GB IT LI NL SE**

(56) Documents cités:
**EP-A- 0 252 499**
**FR-A- 2 536 928**
**GB-A- 2 102 606**

**CRYPTO '86, Santa Barbara, CA, US, août 1986, no. 263, pages 186-194, Springer-Verlag; A. FIAT et al.: "How to prove yourself practical solutions to identification and signature problems"**

**COMPUTERS & SECURITY, vol. 5, no. 3, septembre 1986, pages 243-250, Elsevier Science Publishers B.V., Amsterdam, NL; G.M.J. PLUIMAKERS: "Authentication: a concise survey**

(73) Titulaire: **ETAT FRANCAIS représenté par le Ministre Délégué des Postes et Télécommunications
(CENTRE NATIONAL D'ETUDES DES TELECOMMUNICATIONS) 38-40 rue du Général Leclerc
F-92131 Issy-les-Moulineaux(FR)**

Titulaire: **ETABLISSEMENT PUBLIC DE DIFFUSION dit "TELEDIFFUSION DE FRANCE"
10, rue d'Oradour sur Glane
F-75932 Paris Cédex 15(FR)**

Titulaire: **N.V. Philips' Gloeilampenfabrieken
Groenewoudseweg 1
NL-5621 BA Eindhoven(NL)**

(72) Inventeur: **Guillou, Louis
16, rue de l'Ise Bourgbarre
F-35230 Saint Erblon(FR)**
Inventeur: **Ouisquater, Jean-Jacques
3 Avenue des Canards
B-1640 Rhode-Saint-Genève(BE)**

(74) Mandataire: **Mongrédien, André et al
c/o BREVATOME 25, rue de Ponthieu
F-75008 Paris(FR)**

## Description

La présente invention a pour objet des procédés et des systèmes d'authentification d'accréditations ou de messages à apport nul de connaissance et un procédé de signature de messages.

L'invention trouve de nombreuses applications dans la vérification de l'authenticité de cartes bancaires dites "à puces" ou plus généralement de l'authenticité de tout support permettant à son détenteur de commander un accès, (à un local, à un coffre, à une banque de données, à un système informatisé, à une ligne téléphonique, etc...). Elle s'applique également à la vérification de l'authenticité de messages de toute nature, ces messages pouvant commander une ouverture ou une fermeture, l'enclenchement ou l'arrêt d'un système, la commande de la mise à feu d'un engin, la commande d'un satellite, le déclenchement d'une alerte etc... Enfin, l'invention permet de signer des messages de telle manière que leurs destinataires soient assurés de leur provenance, et puissent à leur tour convaincre un tiers sur cette provenance.

L'invention s'appuye sur deux branches de la cryptographie qui sont respectivement la cryptographie à clé révélée (ou à clé publique) et les procédures de vérification à apport nul de connaissance. Bien que l'invention ne concerne pas un procédé de chiffrement, il n'est pas inutile de rappeler en quoi consistent ces deux techniques.

De tout temps le maintien du secret des communications a été une préoccupation. Aujourd'hui que les systèmes de télécommunications prolifèrent, il est devenu un problème majeur. De ce fait, les techniques de chiffrement et de déchiffrement ont progressé considérablement ces dernières années. Ce progrès a d'ailleurs été encore accéléré par l'avènement des calculateurs, qui ont permis d'élaborer des cryptosystèmes à hautes performances.

Dans un cryptosystème, un message M, dit message en clair, est transformé à l'aide d'une clé E, pour donner un message E(M) dit message chiffré. A la clé E correspond une clé inverse D qui permet de retrouver le message en clair par une transformation inverse : $D(E(M)) = M$.

Dans les techniques traditionnelles les deux clés E et D sont tenues secrètes et ne sont connues que des seuls interlocuteurs.

Cependant, un cryptosystème original a été developpé ces dernières années, dans lequel la clé de chiffrement n'est plus tenue secrète mais est, au contraire, révélée. Paradoxalement, cette révélation n'affaiblit en rien la sécurité du système. En effet, il se trouve que le chiffrement utilise une fonction telle que la connaissance de la clé E ne permet pas, dans la pratique, de retrouver la clé D de déchiffrement. On parle alors, de manière imagée, d'une fonction "trappe" pour la fonction de chiffrement, fonction qui est particulièrement difficile à inverser, sauf pour celui qui connaît la valeur de la trappe.

Les principes généraux de ces systèmes ont été décrits dans l'article de W. DIFFIE et M. HELLMANN intitulé "New Directions in Cryptography" publié dans IEEE, Transactions ou Information Theory, vol. IT-22, pp 644-654, Nov. 1976.

On peut aussi consulter à ce sujet l'article de M. HELLMAN intitulé "The Mathematics of Public-Key Cryptography" publié dans Scientific American d'Août 1979, vol.241, n°2, pp 130-139 ou sa traduction française dans l'édition de "Pour la Science" sous le titre "Les Mathématiques de la Cryptographie à clef révélée", Octobre 1979, vol. n°24, pp 114-123.

Les principes théoriques de la cryptographie à clé révélée ont pu être mis en application de manière particulièrement efficace dans un système dit RSA (des initiales de ses inventeurs Ronald RIVEST - Adi SHAMIR et Léonard ADLEMAN). Ce système est décrit dans l'article de Martin GARDNER intitulé "A new kind of cipher that would take millions of year to break" publié dans Scientific American, Août 1977, pp. 120-121. Dans le système RSA la fonction trappe est la factorisation d'un nombre en éléments premiers. On sait que l'opération de factorisation est l'une des plus difficiles de l'arithmétique. Par exemple pour trouver, à la main, les facteurs premiers d'un nombre modeste à 5 chiffres comme 29 083, il faut quelques minutes. Ces nombres sont 127 et 229. Mais l'obtention du produit de 127 par 229 ne prend que quelques secondes. L'asymétrie d'une telle opération est donc flagrante. Naturellement, le recours à un ordinateur accélère la factorisation mais il demeure que, pour factoriser un nombre de deux cents chiffres, même en mettant ensemble les ordinateurs les plus puissants ordinateurs.

En pratique donc, on ne sait pas factoriser un très grand nombre.

Ces propriétés sont exploitées dans le système RSA de la manière suivante. On choisit deux nombres premiers distincts, soit a et b, et on en forme le produit, soit $N = a.b$. On choisit également un entier p, qui est premier avec le plus petit commun multiple de (a-1) et (b-1). Pour chiffrer un message, préalablement mis sous forme numérique M, M étant compris entre 0 et N-1, on calcule la puissance pième de M dans l'anneau des entiers modulo N, soit $C = M^p \bmod N$. (On rappelle que la valeur d'un entier x modulo un entier y est égale un reste de la division de x par y ; ainsi, 27 modulo 11 est égal à 5, car 27 divisé par 11 donne 5 comme reste). La fonction "élever à la puissance p modulo N" définit alors une permutation des entiers de 0 à N-1.

Pour déchiffrer un message tel que C il faut extraire la racine pième du message chiffré C dans l'anneau des entiers modulo N. On montre que cette opération revient à élever le nombre C à la puissance d, d étant l'inverse de l'exposant p modulo le plus petit commun multiple des nombres (a-1) et (b-1). Si l'on ne connait pas les facteurs premiers a et b, la détermination de d est impossible et avec elle, l'opération de déchiffrement.

Par exemple, en choisissant A = 47 et b = 59, on obtient N = 47.59 = 2773. On peut prendre p = 17. La clé de codage est donc définie par les deux nombres 2773 et 17 (naturellement, dans la pratique, les nombres utilisés sont beaucoup plus grands que dans cet exemple).

Le codage d'un mot M se présentant sous forme du nombre 920 s'effectue par l'opération suivante :

$$C = 920^{17} \bmod 2773$$

soit

$$C = 948 \bmod 2773.$$

Inversement, pour déchiffrer le nombre 948, on utilisera un exposant d inverse de 17 modulo 1334 qui est le ppcm de 46 et 58. Cet exposant d est 157 car 157.17 = 2669 soit 1 modulo 1334. Déchiffrer 948 revient donc à calculer $948^{157} \bmod 2773$ soit 920, ce qui est bien le message initial.

Ainsi, dans le système RSA, les nombres N et p peuvent ils être publics (on parle alors de la "puissance publique p"), mais les nombres a et b doivent rester secrets.

Naturellement, il est toujours possible d'utiliser plus de deux facteurs premiers pour constituer le nombre N.

Le système RSA est décrit dans le brevet des Etats-Unis d'Amérique n°4,405,829 délivré le 20 Septembre 1983.

Un tel système peut non seulement servir à chiffrer mais aussi à signer un message.

Dans le contexte de la signature de messages une entité censée émettre des messages M, entité appelée signataire, est réputée travailler avec une clé publique (N, p). Cette entité, pour signer ses messages avant émission, y ajoute une redondance pour obtenir un élément de l'anneau des entiers modulo N, puis élève cet élément à la puissance d (inverse de p) modulo N. L'entité en question, détenant les paramètres secrets de la clé publique, c'est-à-dire les deux facteurs premiers a et b, connait d. Le message signé est donc $S = [\text{Red}(M)]^d \bmod N$.

Pour vérifier la signature, le destinataire du message utilise la clé publique (N, p) attachée à l'entité émettrice et calcule $S^p \bmod N$, ce qui, par hypothèse redonne l'élément codant le message M avec sa redondance. En retrouvant la redondance le destinataire en conclut ainsi que le message n'a pu être envoyé que par l'entité qui prétend l'avoir fait, puisque seule, celle-ci, était capable de traiter le message de cette manière.

Naturellement, les deux opérations de chiffrement et de signature peuvent se combiner. Dans ce cas, l'émetteur commence par signer son message en utilisant sa clé secrète ; puis il le chiffre en utilisant la clé publique de son correspondant. A la réception, le correspondant déchiffre le message à l'aide de sa clé secrète, puis authentifie le message en utilisant le clé publique de l'émetteur.

Ces techniques de cryptographie conduisent ainsi à des méthodes d'authentification (d'un support, d'un message, etc...). Pour exposer plus en détail cet aspect, qui est au coeur de l'invention, on prendra comme exemple l'authentification des cartes bancaires dites "à puce", sans que cela constitue naturellement en quoi que ce soit une limitation de la portée de l'invention. Le procédé décrit ci-après est utilisé dans les cartes bancaires à puce émises aujourd'hui en France et en Norvège, la généralisation des puces dans les cartes bancaires est en cours dans ces deux pays.

Une carte bancaire à puce possède une identité, qui est constituée par un enchaînement d'informations telles que le numéro de série de la puce, le numéro du compte bancaire, une période de validité et un code d'usage. La carte peut donner, sur demande, ces informations d'identité, qui se présentent sous forme d'une suite de bits formant un mot I.

A l'aide de règles de redondance, on peut constituer un nombre J deux fois plus long que I qu'on notera par la suite Red(I) = J. Par exemple, si le nombre I s'écrit sous forme de quartets, chaque quartet peut être complété par un quartet de redondance de manière à former autant d'octets de type à codage de HAMMING. Le nombre J est appelé souvent l'identité "ombragée" (l'ombre étant constituée en quelque sorte par la redondance qui accompagne l'identité).

L'Organisation Internationale de Normalisation (ISO) a précisé ces questions dans la note ISO/TC97/SC20/N207 intitulée "Digital Signature with Shadow" devenue avant projet de norme DP9796.

L'autorité habilitée à délivrer de telles cartes, en l'occurrence la banque, choisit un système à clé publique (N, p). Elle publie les nombres N et p mais garde secrète la factorisation de N. L'identité ombragée J de chaque carte est alors considérée comme un élément de l'anneau des entiers modulo N. La banque peut en extraire la racine p ième dans cet anneau (ce qui, comme exposé plus haut, nécessite la connaissance des facteurs premiers de N, ce qui est le cas). Ce nombre, noté par la suite A, est en quelle que sorte l'identité de la carte signée par la banque. On l'appelle "accréditation". On a donc par définition $A = J^{1/p}$

mod N.

Authentifier une accréditation revient alors à lire l'identité de la carte, soit sous la forme simple I, soit sous la forme ombragée J, puis à lire l'accréditation A dans la carte, à élever celle-ci à la puissance p dans l'anneau des entiers modulo N (ce qui est possible puisque les paramètres N et p sont connus) et à comparer enfin le résultat, soit $A^p$ mod N, à J. Si $A^p$ mod N est égal à J alors l'accréditation A est authentique.

Si cette méthode permet de détecter des fausses cartes dont les identités auraient été élaborées de manière fantaisiste, elle présente néanmoins un inconvénient qui est celui de révéler l'accréditation des cartes authentiques. Un vérificateur peu scrupuleux pourrait donc reproduire des cartes identiques à celle qu'il vient de vérifier (cartes que l'on pourrait appeler des "clones") en reproduisant l'accréditation qu'il a lue dans la carte authentique.

Or, l'authentification d'une accréditation ne requiert pas, en toute rigueur, la communication de celle-ci au vérificateur, mais seulement l'établissement d'une conviction que la carte dispose d'une accréditation authentique. Le problème est donc finalement de démontrer que la carte détient une accréditation authentique, sans révéler celle-ci.

Ce problème, qui semble insoluble à première vue, peut cependant être résolu par une procédure dite de preuve par apport nul de connaissance ("zero-knowledge proof"). Dans une telle procédure, l'entité qui tente d'apporter la preuve (et que l'on appellera par la suite le "vérifié") et l'entité qui attend cette preuve (et qu'on appellera le "vérificateur") adoptent un comportement interactif et probabiliste.

Cette technique à été décrite par Shafi GOLDWASSER, Silvio MICALI et Charles RACKOFF dans leur communication au "17th ACM Symposium on Theory of Computing" qui s'est tenu en Mai 1985, communication intitulée "The Knowledge Complexity of Interactive Proof Systems" et publiée dans les Comptes Rendus pp.291-304. Les premiers exemples ont été trouvés en théorie des graphes.

Adi SHAMIR a pensé le premier à utiliser ce procédé en théorie des nombres et on pourrait l'appliquer aux cartes à puces de la manière suivante. Ce procédé, que l'on appellera par la suite procédé S, est le suivant.

Au début de la transaction d'authentification, la carte proclame son identité I. Les règles de redondance connues de tous, permettent de déduire J, deux fois plus long que I, qui correspond à l'identité ombragée. La carte et le vérificateur connaissent tous deux les nombres N et p publiés par l'émetteur de cartes, mais seul ce dernier dispose de la factorisation du nombre N, qui est l'information de trappe utilisée pour calculer les accréditations.

La transaction d'authentification se poursuit en répétant le traitement suivant :

- la carte tire au hasard un élément r de l'anneau des entiers modulo N, en calcule la puissance p ième ($r^p$ mod N) dans l'anneau, et transmet cette puissance au vérificateur en guise de titre T pour l'itération ;
- le vérificateur tire au hasard un bit d (0 ou 1) (ou si l'on veut, tire à pile ou face) pour demander à la carte en guise de témoin t : pour pile l'élément r, et pour face le produit de l'élément r par l'accrédition dans l'anneau (r.A mod N) ; autrement dit, dans l'incertitude du tirage le vérifié doit tenir disponible r et r.A mod N ce qui implique la connaissance de A ;
- le vérificateur élève le témoin t à la puissance p modulo N pour retrouver : pour pile, le test T, et pour face le produit dans l'anneau du titre T par l'identité ombragée J.

Ainsi, d'une part, il faut disposer de l'accréditation A pour posséder simultanément les deux valeurs possibles du témoin t, soit r et rA. D'autre part, le vérificateur ne peut déduire de cette transaction la valeur A de l'accréditation car, même s'il demande au vérifié de lui fournir rA, il ne connaît pas r, qui a été tiré au hasard par le vérifié (le vérificateur connaît bien $r^p$, fourni comme titre par le vérifié, mais il est incapable d'en extraire la racine p ième modulo N, puisqu'il ne connaît pas la factorisation de N).

Le vérifié qui ne serait pas détenteur d'une accréditation authentique pourrait bluffer en tentant de deviner le tirage du vérificateur. S'il parie sur "0" ("pile") il estime que le vérificateur élèvera le titre à la puissance p modulo N et que le vérificateur comparera le résultat obtenu au titre T. Pour convaincre le vérificateur, le vérifié devra fournir comme titre T le témoin élevé à la puissance p. Si le bluffeur parie au contraire sur "1" ("face") il estime que le vérificateur élèvera le titre à la puissance p et multipliera ensuite le résultat obtenu par J. Il lui faut donc, pour convaincre, transmettre comme titre T, le témoin élevé à la puissance p multiplié par J.

Autrement dit, le vérifié a une chance sur deux de donner une bonne réponse s'il renverse la chronologie des événements, c'est-à-dire s'il détermine non pas d'abord le titre T puis le témoin t, mais s'il parie sur le tirage du vérificateur et s'il constitue le titre a posteriori à l'aide d'un témoin tiré au hasard.

Dans ce processus probabiliste, les chances du vérifié de deviner la bonne réponse sont de une sur deux à chaque traitement, de sorte qu'en répétant ce traitement k fois, les chances du bluffeur tombent à $1/2^k$. Le facteur de sécurité de ce procédé d'authentification est donc de $2^k$. En pratique, k est de l'ordre de 16 à 24.

Dans un tel procédé le nombre p est petit, par exemple 3. On peut aussi utiliser 2, mais dans ce cas certaines précautions doivent être prises dans le choix des facteurs premiers du nombre N pour que la fonction "élever au carré modulo N" soit une permutation sur les résidus quadratiques de l'anneau des entiers modulo N. Les nombres a et b doivent être des entiers de la forme $4x+3$ ; on rappelle que les résidus quadratiques sont des éléments qui sont des carrés dans l'anneau et l'identité ombragée J doit pouvoir être modifiée en un résidu quadratique représentatif avant de calculer l'accréditation. Cette solution est décrite dans le document déjà cité ISO/TC97/SC20/N207. D'autres solutions existent cependant.

L'entier N, comme dans les cartes bancaires aujourd'hui, peut être de la forme $N = K + 2^{320}$ où K est un entier de 240 bits publié et connu de tous les terminaux. Seul l'émetteur de cartes dispose de la factorisation de N. Il est tout de même conseillé de prendre des nombres composés plus grand.

L'identité I, comme dans les cartes bancaires aujourd'hui, peut être un motif de 160 bits, obtenu par le chaînage d'un numéro de série de la puce de 44 bits, d'un numéro de compte bancaire de 76 bits, d'un code d'usage de 8 bits et d'une période de validité de 32 bits. L'identité ombragée présente alors 320 bits. L'accréditation est alors la racine cubique de ce mot, modulo N. C'est un nombre de 320 bits.

Un perfectionnement de cette technique consiste à utiliser non pas l'accréditation elle-même A ($A^p \bmod N = J$) mais son inverse, noté B. On a alors $B^p J \bmod N = 1$ ce qui permet de simplifier la comparaison du titre et du témoin. En effet, il suffit alors de transmettre un témoin égal à r(dB-d+1) (qui est égal soit à r si $d = 0$ soit à rB si $d = 1$ et de calculer $t^p$(dJ-d+1) mod N pour trouver le titre T. Ce dernier peut alors n'être transmis que partiellement, par exemple sous forme d'une centaine de ses bits ou encore mieux après une compression par une fonction à sens unique.

On rappelle qu'une fonction de compression fait correspondre à un ensemble de n éléments un ensemble de m autres éléments, m étant inférieur à n et tel qu'il sont pratiquement impossible de localiser deux éléments ayant même image.

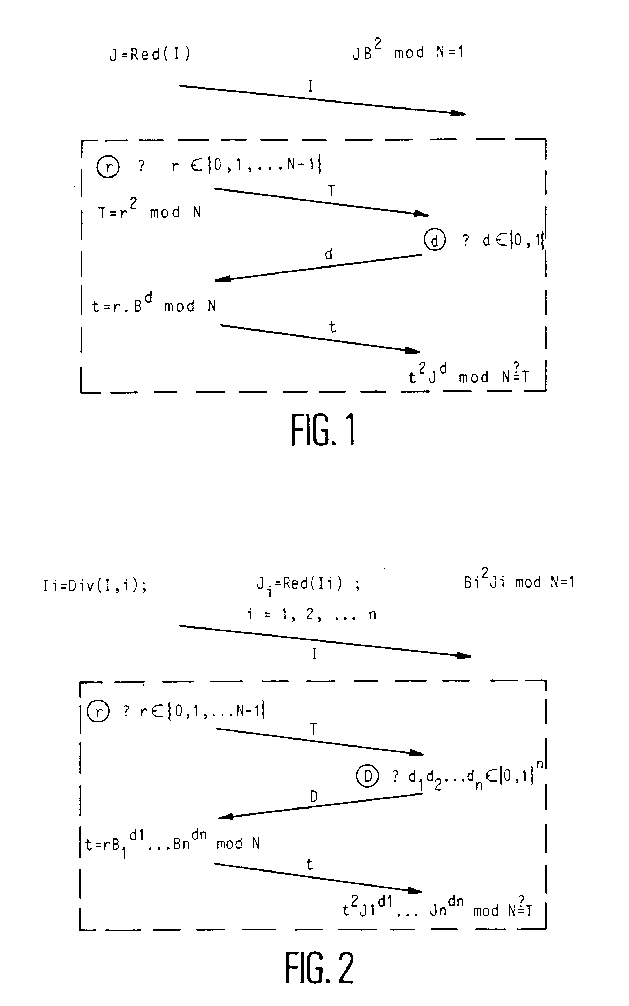

La figure 1 annexée à la description illustre ce procédé. Les flèches allant de gauche à droite représentent une transmission du vérifié vers le vérificateur (identité I, titre T, témoin t) et les flèches allant de droite à gauche une transmission dans le sens inverse (bit d tiré au hasard). Un tirage au hasard est représenté par un cercle associé à un point d'interrogation. Le signe $\epsilon$ signifie "appartient à" et les nombres entre accolades désignent l'ensemble des entiers compris entre les deux bornes indiquées, bornes comprises. La comparaison finale décidant de l'authenticité de l'accréditation est schématisée par un signe égal surmonté d'un point d'interrogation. Le tireté marque un ensemble d'opérations effectuées k fois (itération).

Il a été proposé récemment un procédé encore plus perfectionné, qui utilise des accréditations multiples. Ce procédé a été décrit dans la communication de Amos FIAT et Adi SHAMIR, publiée dans le Compte Rendu de CRYPTO' 86, Santa Barbara, CA, USA, August 1986, communication intitulée : "How to Prove Yourself : Practical Solutions to Identification and Signature Problems", Springer Verlag, lecture Notes in Computer Science, N°263, pp.186-194.

En notant dans la carte plusieurs accréditations, on augmente l'efficacité du traitement, et on réduit le nombre d'itérations nécessaires pour atteindre un niveau donné de sécurité vis-à-vis de la chance laissée au bluffeur. Dans cette méthode de diversification, on produit n identités diversifiées I1, ..., In qui, complétées par leurs ombres, donnent n identités diversifiées ombragées J1, ..., Jn. La carte contient les n accréditations inverses B1, ..., Bn qui vérifient les relations $J_i.B_i^p \bmod N = 1$.

Dans ce procédé, que l'on notera FS, chaque traitement ou itération devient alors le suivant (en prenant 2 pour exposant public) :
- la carte tire au hasard un élément r dans l'anneau des entiers modulo N, puis transmet au vérificateur 128 bits du carré de cet élément en guise de titre T ;
- le vérificateur tire au hasard un mot de n bits soit b1, ..., bn, qu'il transmet à la carte ;
- la carte calcule alors le produit de l'élément r par les accréditations inverses désignées par les bits à "1" dans le mots de n bits b1, ..., bn. Et la carte transmet en guise de témoin la valeur t ainsi obtenue :

$$t = r.(b1.B1-b1+1). \ ... \ .(bn.Bn-bn+1) \bmod N$$

- le vérificateur teste ce témoin t en l'élevant au carré dans l'anneau, puis en multipliant ce carré par les identités ombragées diversifiées désignées par les bits à "1" du mot de n bits,

soit : $t^p$.(b1.J1-b1+1). ... .(bn.Jn-bn+1) mod N

L'authenticité est prouvée si l'on retrouve les bits publiés du titre T.

N'importe qui pourrait tirer au hasard un témoin t, puis, dans l'anneau, élever au carré ce titre et multiplier par une sélection d'identités diversifiées pour constituer après coup un titre T. En effet, en donnant ce titre au début du traitement, si la question posée est bien la sélection escomptée, alors le témoin t est une réponse acceptable qui authentifie la carte.

Il y a donc bien une statégie gagnante pour le devin qui connaît à l'avance le tirage du vérificateur.

Pour passer avec succès une itération, le bluffeur doit, cette fois, deviner un mot de n bits et non plus un seul bit comme dans le procédé GMR. Si les $2^n$ valeurs sont équiprobables, le produit de la multiplicité des accréditations (n) par le nombre des itérations (k) réduit exponentiellement les chances laissées au bluffeur. Le facteur de sécurité de la transaction d'authentification est alors $2^{k.n}$.

A chaque itération, le vérifié transmet par exemple 128 bits (par exemple un quart des 512 bits) et un élément de l'anneau, et le vérificateur transmet n bits. A chaque itération, le vérificateur et la carte calculent un carré et font un nombre de multiplications égal au nombre de bits à "1" dans le mot de n bits (poids de HAMMING).

Comme autre compromis entre efficacité de l'itération et nombre maximum de multiplications à effectuer durant l'itération on peut limiter le nombre de bits à 1 dans le mot de n bits.

On pourra consulter à propos de cette technique, le compte rendu de la communication de Amos FIAT et Adi SHAMIR au "5e Congrès Mondial de la Protection et de la Sécurité Informatique et des Communications" qui s'est tenu à Paris les 4-6 Mars 1987 sous le titre "Unforgeable Proofs of Identity".

La figure 2 annexée illustre schématiquement ce procédé FS, avec les mêmes conventions que pour la figure 1.

Ces procédés d'authentification d'accréditation peuvent se transposer aisément à l'authentification d'un message émis par une entité censée être accréditée. Dans ce cas, le titre T transmis par le vérifié n'est plus formé uniquement par $r^p$ mod N, comme dans le cas précédent, mais aussi par le message m à authentifier. Plus précisément, le résultat par une fonction de compression, notée f, dont les arguments sont m et $r^p$ mod N.

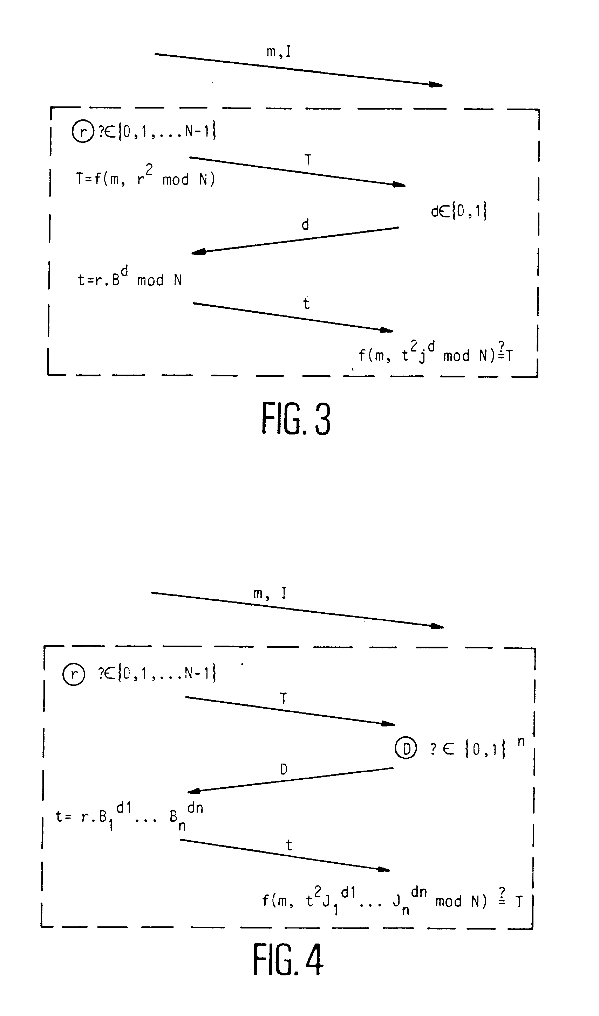

Les figures 3 et 4 schématisent ces procédés dans le cas des techniques S et FS.

Enfin, ces techniques peuvent également servir à signer un message. La fonction de compression joue alors le rôle assigné au tirage du vérificateur. Plus précisément, dans le procédé de type S, le signataire tire k éléments r dans l'anneau des entiers modulo N, soit R1, R2, ..., rk, qui vont jouer le rôle des différents r tirés au cours des k itérations. Le signataire élève ces entiers au carré mod N et calcule la fonction de compression f(m, $r^2$ mod N, ... $rk^2$ mod N) ce qui fournit un nombre D ayant pour bits d1, d2, ..., dk. Chaque bit di de ce nombre joue le rôle que jouait le bit tiré au hasard dans le procédé d'authentification d'accréditation décrit plus haut. Le signataire forme alors k titres ti = riB$^{di}$ mod N, avec i = 1,2...k. Le message signé est alors constitué par un multiplet formé par m, I, d1, ..., dk, t1, ..., tk.

Pour vérifier un tel message signé on élève au carré les titres ti modulo N et on multiplie chaque carré par J$^{di}$ modulo N. On calcule ensuite la fonction de compression f(m, t1$^2$J$^{d1}$ mod N, ..., tk$^2$ J$^{dk}$ mod N) et l'on compare le résultat obtenu avec le nombre D, soit avec les bits d1, d2, ..., dk.

Dans l'application à la signature de messages, le nombre k est plus grand que dans l'authentification. Il est de l'ordre de 60 à 80. En effet, la vérification ne s'effectue plus en temps réel et le fraudeur a donc tout son temps pour élaborer une fausse signature.

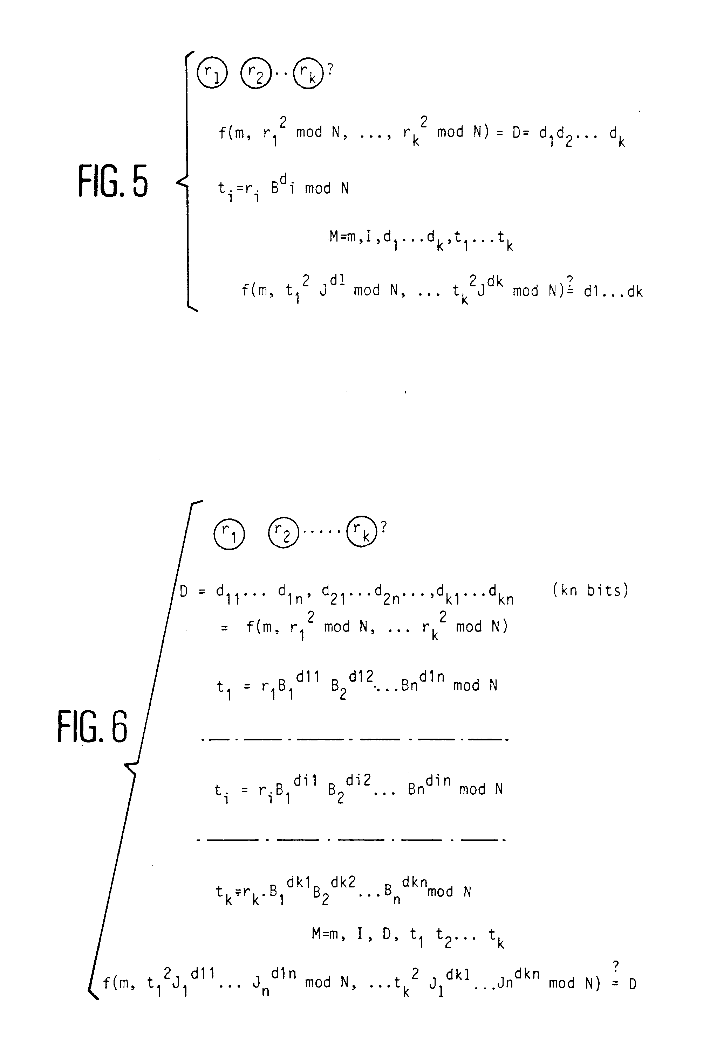

Les figures 5 et 6 schématisent ce procédé dans le cas des techniques S et FS. Si toutes ces techniques de l'art antérieur conviennent bien en théorie, elles présentent cependant des inconvénients du point de vue pratique. En particulier, la méthode FS, avec la multiplicité de ses accréditations, consomme un espace mémoire important. Par ailleurs, la nécessité d'effectuer une répétition des traitements allonge la durée des échanges. Enfin, la multiplicité des témoins allonge les informations a ajouter à un message pour le signer.

La présente invention a justement pour but de remédier à cet inconvénient. A cette fin elle préconise une technique utilisant une seule accréditation (et non plus des accréditations multiples) et un seul traitement (et non plus une répétition de traitements).

De façon plus précise, la présente invention a d'abord pour objets une procédé d'authentification d'une accréditation et un procédé d'authentification d'un message, procédés qui mettent tous deux en oeuvre, d'une part, l'élaboration d'une accréditation basée sur le système à clé publique et, d'autre part, une preuve à apport nul de connaissance ;

a) pour ce qui est de l'opération d'élaboration de l'accréditation, elle comprend les opérations connues suivantes :

- une autorité habilitée à délivrer des accréditations choisit deux nombres premiers, forme le produit (N) de ces deux nombres, tient secrets ces nombres qui constituent alors les facteurs premiers de N, choisit un entier p et publie N et p;

- pour chaque détenteur d'une accréditation, une identité numérique I est constituée, puis complétée par redondance pour former un mot J appelé identité ombragée,

- une accréditation A est élaborée par l'autorité en prenant la racine pième de l'identité ombragée dans l'anneau des entiers modulo N, (A$^p$ mod N = J),

- dans un support approprié contenant une mémoire, l'autorité charge l'inverse modulo N de l'accréditation A, soit un nombre B appelé accréditation inverse ($B^p J$ mod $N = 1$), ce nombre B constituant l'accréditation qu'il s'agit d'authentifier ;

b) pour ce qui est de l'authentification de l'accréditation ainsi élaborée, cette opération consiste, de manière elle aussi connue, en un processus numérique interactif et probabiliste du type à apport nul de connaissance et s'établissant entre un support contenant une accréditation, support appelé "le vérifie" et un organe d'authentification appelé "le vérificateur", ce processus comprenant au moins un traitement numérique constitué par les opérations connues suivantes :

- le vérifié tire d'abord du hasard un entier r appartenant à l'anneau des entiers modulo N,
- le vérifié élève cet entier r à la puissance p modulo N, le résultat étant appelé titre T,
- le vérifié délivre alors au moins une partie des bits du titre T,
- le vérificateur tire ensuite au hasard un nombre D et demande au vérifié d'effectuer certaines opérations sur r et sur l'accréditation inverse B, ces opérations étant liées au nombre D tiré au hasard par le vérificateur et effectuées dans l'anneau des entiers modulo N,
- le vérifié délivre au vérificateur un nombre t, appelé témoin, résultat de ces opérations,
- le vérificateur effectue à son tour des opérations portant sur le témoin t délivré par le vérifié et sur l'identité ombragée J du vérifié, opérations liées elles aussi au nombre d tiré au hasard par le vérificateur et effectuées dans l'anneau des entiers modulo N,
- le vérificateur compare le résultat ainsi obtenu avec les bits du titre T que le vérifié a délivrés en début de processus de vérification, et admet l'authenticité de l'accréditation s'il retrouve ces bits.

Le procédé d'authentification d'accréditation selon l'invention est caractérisé par le fait que :

a) lors de l'élaboration de l'accréditation (B) le nombre p servant à extraire la racine p ième de l'identité ombragée (J) est choisi grand et comprend au moins une dizaine de bits,

b) pour l'authentification de l'accréditation le processus ne comprend qu'un seul traitement interactif et probabiliste (et non une répétition d'un tel traitement), ce traitement unique consistant dans les opérations suivantes :

- le nombre que le vérificateur tire au hasard est un entier D compris entre 0 et p-1 (bornes incluses),

- l'opération que le vérifié effectue pour délivrer un témoin t est le produit, dans l'anneau des entiers modulo N, de l'élément r qu'il a lui même tiré au hasard, par la puissance Dième de l'accréditation inverse B, le témoin étant alors $t = r.B^D$ mod N,
- les opérations qu'effectue le vérificateur sont le produit, dans l'anneau des entiers modulo N, de la puissance p ième du témoin t par la puissance D ième de l'identité ombragée J, soit $t^p J^D$ mod N,
- l'opération de comparaison effectuée par le vérificateur porte alors sur les bits du titre T délivrés par le vérifié et sur les bits obtenus par l'opération précédente, l'authenticité de l'accréditation étant acquise en un seul traitement dès lors que tous les bits du titre délivrés par le vérifié sont retrouvés par le vérificateur dans $t^p J^D$ mod N.

Pour ce qui est du procédé d'authentification de message, le procédé selon l'invention est caractérisé par le fait que :

a) lors de l'élaboration de l'accréditation du donneur d'ordre, le nombre p servant à extraire la racine p ième de l'identité ombragée est choisi grand et comprend au moins une dizaine de bits,

b) pour l'authentification du message, le processus ne comprend qu'un seul traitement interactif et probabiliste (et non une répétition d'un tel traitement), ce traitement unique consistant dans les opérations suivantes :

- le nombre que le vérificateur tire au hasard est un entier D compris entre 0 et p-1 (bornes incluses),
- l'opération que le vérifié effectue pour délivrer le témoin t est le produit, dans l'anneau des entiers modulo N, de l'élément r qu'il a lui même tiré, par la puissance Dième de l'accréditation inverse B, le témoin étant alors $r.B^D$ mod N,
- les opérations qu'effectue le vérificateur sont le produit, dans l'anneau des entiers modulo N, de la puissance p ième du témoin t, par la puissance D ième de l'identité ombragée J,
- le vérificateur forme la fonction de compression du message et du résultat des opérations précédentes soit $f(m, t^p J^D$ mod N),
- la comparaison que le vérificateur effectue porte alors sur le résultat de la fonction de compression qu'il a obtenu et sur le titre T que le vérifié lui a délivré en début de processus de vérification, l'authenticité du message étant acquise en un seul traitement dès lors que, à la fin de ce traitement, il y a correspondace entre les bits du résultat de la fonction de compression obtenu par le vérificateur et les bits du titre délivrés par le vérifié.

L'invention a enfin pour objet un procédé de signature de message. Dans ce cas l'accréditation du signataire est élaborée selon le procédé connu à clé publique décrit plus haut et la signature consiste en un traitement numérique probabiliste connu comprenant les opérations suivantes :

- le signataire tire au hasards au moins un entier r appartenant à l'anneau des entiers modulo N,
- le signataire élève cet entier r à la puissance p modulo N,
- le signataire calcule le résultat d'une fonction de compression f en prenant comme arguments le message m à signer et la puissance $r^D$ mod N obtenue,
- le signataire forme au moins un témoin t en effectuant certaines opérations sur r et sur l'accréditation inverse B, ces opérations étant liées au nombre D et étant effectuées dans l'anneau des entiers modulo N,
- le signataire transmet le message m, son identité I, le mot D, le témoin t, l'ensemble constituant un message signé.

Le procédé de signature de message selon l'invention est caractérisé par le fait que :

a) lors de l'élaboration de l'accréditation du signataire le nombre p servant à extraire la racine p ième de l'identité ombragée est choisi grand et comprend plusieurs dizaines de bits,

b) pour l'opération de signature du message :

- le signataire ne tire au hasard qu'un seul entier r appartenant à l'anneau des entiers modulo N,
- la fonction de compression a pour arguments le message m et la puissance p ième de r, ce qui fournit un nombre D,
- le titre unique produit par le signataire est le produit, dans l'anneau des entiers modulo N, de l'entier r par la puissance D ième de l'accréditation inverse B,
- le signataire fournit, avec le message m, son identité I, le mot D et le titre t.

Dans les deux premiers procédés, le nombre p comprend au moins 10 bits et de préférence entre 16 et 24 bits.

Dans le procédé de signature le nombre p est plus grand et comprend plusieurs dizaines de bits, par exemple de 60 à 80 bits.

La valeur de p est en effet le facteur de sécurité d'un traitement élémentaire. Si p est convenable pour le but recherché alors qu'on ne dispose que d'une seule accréditation profonde, on peut se contenter d'un seul traitement.

La présente invention a également pour objet des systèmes selon les revendications 4,5,6 qui mettent en oeuvre ces procédés.

De toute façon l'invention sera mieux comprise à la lumière de la description qui va suivre, qui se réfère à des dessins annexés. Ces dessins comprennent :

- les figures 1 à 6, déjà décrites, qui illustrent les procédés S et FS de l'art antérieur ;
- la figure 7 illustre le procédé d'authentification d'une accréditation selon l'invention ;
- la figure 8 illustre le procédé d'authentification de message selon l'invention ;
- la figure 9 illustre le procédé de signature de message selon l'invention ;
- la figure 10 montre schématiquement un ensemble permettant de mettre en oeuvre les procédés de l'invention.

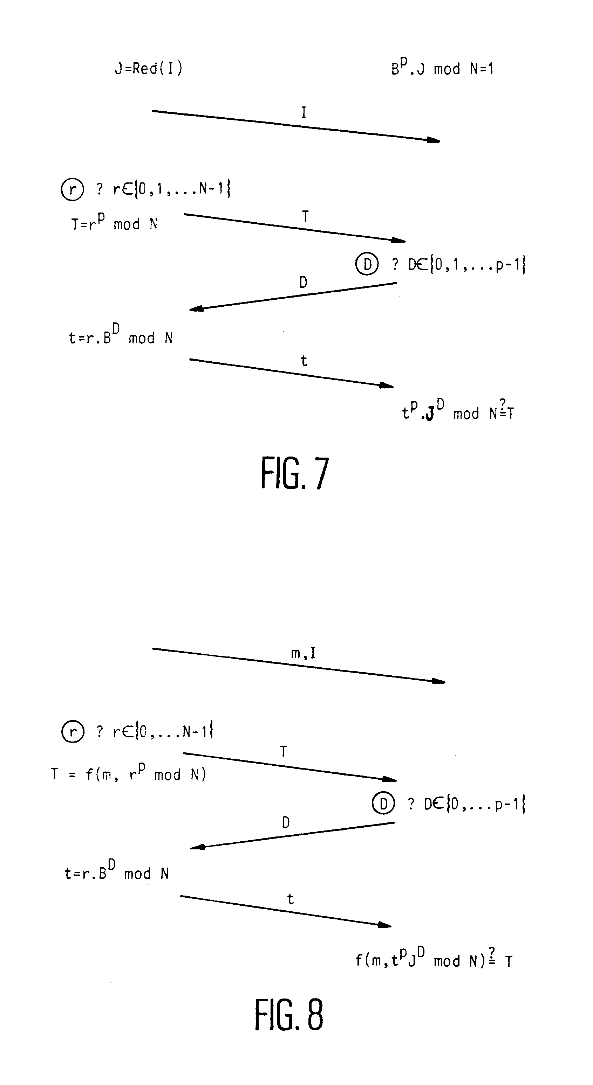

Les conventions utilisées dans les figures 7 à 9 sont les mêmes que celles des figures 1 à 6. Dans tous les cas l'accréditation est obtenue par l'utilisation d'un nombre p qui est grand. Les inventeurs qualifient cette accréditation de "profonde" par opposition aux accréditations habituelles utilisées dans ce domaine pour lesquelles p était de l'ordre de 2 ou 3 et qui sont, en quelque sorte "superficielles".

Dans le cas des cartes à puce on a donc, dans le cas de l'invention, le traitement suivant :

- la carte tire au hasard un élément r ($1 \leq r \leq N-1$) dans l'anneau des entiers modulo N, et donne en guise de titre T 128 bits de la puissance publique de cet élément ($r^p$ mod N) ;
- le vérificateur tire au hasard un exposant D de 0 à p-1 et le transmet à la carte ;
- la carte calcule le témoin t qui est le produit (dans l'anneau) de l'élément r par la puissance D ième de l'accréditation B ($t = r.B^D$ mod N) ;
- le vérificateur calcule dans l'anneau le produit de la puissance p ième du témoin t par la puissance D ième de l'identité ombragée J, soit $t^p.J^D$ mod N.

La preuve est acceptée si tous les bits publiés du titre T sont ainsi retrouvés.

N'importe qui ayant deviné la question du vérificateur (lexposant D) peut tirer au hasard un témoin t, puis faire à l'avance les calculs du vérificateur, c'est-à-dire faire le produit dans l'anneau du témoin t à l'exposant p par l'identité ombragée J à l'exposant D. En donnant le titre T au début de l'itération, si la question posée est bien D, alors le témoin t est une réponse acceptable.

Ce raisonnement indiquant une stratégie gagnante pour le devin montre que l'on ne sait pas distinguer des données provenant de l'enregistrement d'une transaction réussie et des données provenant d'une mascarade construite en inversant la chronologie de l'itération, c'est-à-dire en choisissant les exposants avant les titres. Le vérificateur recueille des informations impossibles à distinguer de celles qu'il aurait pu produire tout seul, sans interaction avec le vérifié, ce qui montre que l'accréditation reste bien secrète dans la carte.

Pour passer avec succès un traitement d'authentification, le bluffeur doit deviner un exposant D. Si les p valeurs de D sont équiprobables, la chance laissée au bluffeur est de 1/p. Le facteur de sécurité est donc p.

Dans un tel traitement le vérifié transmet une centaine de bits en un élément de l'anneau ; le vérificateur transmet un exposant (D). Pour mener à bien un traitement le vérifié calcule d'abord la puissance publique de l'élément r tiré au hasard, puis le produit de cet élément r par la puissance D ième de l'accréditation B. Le vérificateur fait un peu moins de calcul pour retrouver le titre T car il peut combiner intelligemment les calculs de puissance : la puissance Dième de l'identité ombragée J et la puissance pième du témoin t.

Si l'exposant p vaut $2^{16}$, alors l'exposant D est un nombre de 16 bits. Ainsi en un seul traitement, avec un facteur de sécurité de $2^{16}$, soit 65536, le vérifié calcule dans l'anneau 16 carrés, puis 16 carrés et une moyenne de 8 multiplications. Le vérificateur ne calcule que 16 carrés et procède en moyenne à 8 multiplications.

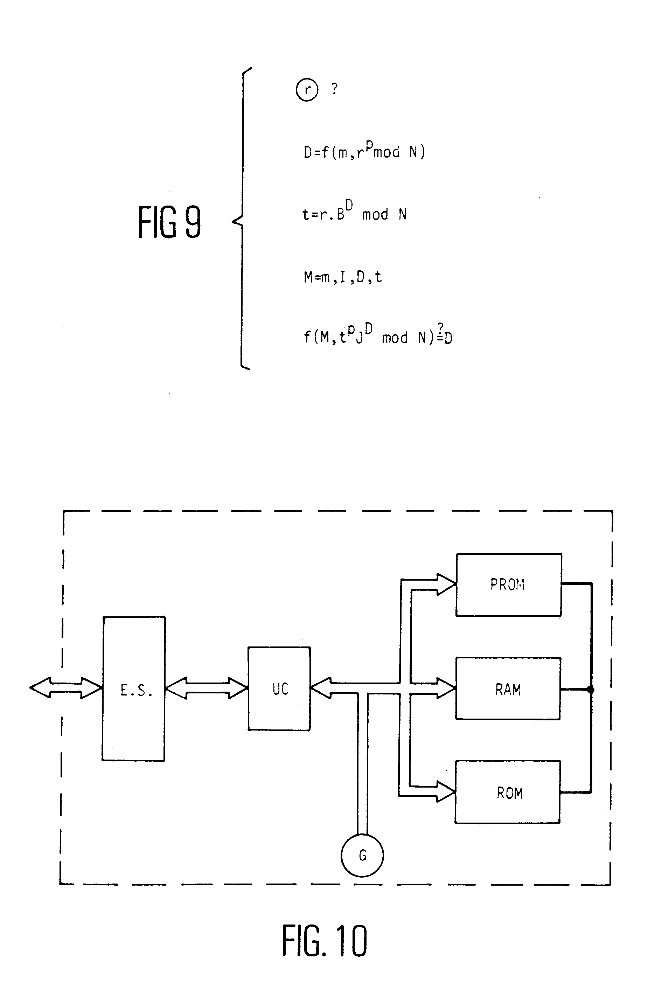

Le procédé d'authentification de message est illustré sur la figure 8 avec les mêmes conventions, la différence avec la figure 7 consistant uniquement dans la formation de la fonction de compression f.

Pour signer un message, le détenteur de l'accréditation B de profondeur p commence par tirer au hasard un élément r dans l'anneau puis calcule la puissance publique de l'élément r($r^p$ mod N). Puis il produit un exposant D grâce à la fonction de compression f appliquée à la concaténation du message m et de la puissance publique de l'élément r. Le témoin t est le produit de l'élément r par la puissance Dième de l'accréditation B. Le message signé est la concaténation de l'identité I, du message m, de l'exposant d et du témoin t.

Pour vérifier une signature, le vérificateur calcule dans l'anneau le produit du témoin t à la puissance p par l'identité ombragée J (reconstruite à partir de l'identité proclamée I) à la puissance D pour reconstituer ce qui doit être la puissance publique de l'élément r. Enfin, le vérificateur doit retrouver l'exposant D en appliqant la fonction f à la concaténation du message m et de la puissance publique reconstituée.

C'est ce qui est illustré sur la figure 9.

Si p s'écrit sur 64 bits quelconques, le signataire fait environ 192 multiplications dans l'anneau (il doit calculer successivement deux puissances avec des exposants de 64 bits sans pouvoir les combiner) pour mener à bien l'opération. Cette complexité est déjà nettement inférieure à celle du procédé RSA : 768 multiplications en moyenne pour une exponentielle modulo un nombre composé sur 512 bits, et 1536 pour un nombre composé sur 1024 bits.

Si p s'écrit sur 64 bits quelconques, le vérificateur fait seulement environ 112 multiplications, car il combine ses opérations en 64 carrés et trois fois 16 multiplications en moyenne, pour calculer d'un seul coup $t^p.J^D$ mod N. Il est heureux que l'authentification soit plus simple que l'élaboration de la signature, car chaque signature est appelée à être vérifiée plusieurs fois.

Mais, on peut choisir $2^{64}$ (c'est-à-dire une puissance de 2) comme exposant p pour simplifier les calculs, sans modifier la sécurité du système. L'élévation à la puissance p se fait alors par 64 carrés. L'exposant D est un nombre de 64 bits. La signature se fait alors en 160 multiplications. La vérification d'une signature se traduit en moyenne par 96 multiplications dans l'anneau, soit 12,5% du RSA à 512 bits et 6,2% du RSA à 1024 bits.

Dans le procédé antérieur FS décrit plus haut, avec 64 accréditations multiples dans le même carte, il faut un carré et une moyenne de 32 multiplications. Ainsi, la méthode de l'invention à accréditation profonde, se paye par un surplus de calculs d'un facteur multiplicatif de l'ordre de 3. Quand, dans l'art antérieur, on se limite à 8 accréditations dans la carte, avec 8 témoins dans la signature, (8 itérations à 5 multiplications, soit 40 multiplications), le rapport diminue encore un peu, en faveur de l'invention.

Bien entendu, on peut aussi choisir $2^{64}+1$ comme exposant public (c'est-à-dire un nombre impair). Au prix d'une seule multiplication supplémentaire pour calculer une puissance publique, on lève ainsi certaines restrictions relatives aux résidus quadratiques dans l'anneau (lorsque l'exposant p est pair, plusieurs éléments de l'anneau pouvant correspondre à la racine pième, mais un seul convenant).

La figure 10 représente schématiquement un calculateur permettant de mettre en oeuvre l'invention.

Le calculateur représenté comprend une interface entrées-sorties ES, une unité centrale UC, une mémoire programmable du type à lecture seulement (PROM), une mémoire à lecture seulement (ROM) et une mémoire à accès direct (RAM). Le calculateur comprend encore un organe G du type générateur de bruit ou générateur aléatoire.

L'accréditation et les informations d'identité inscrites dans la mémoire PROM inaccessibles de l'extérieur. Les programmes sont inscrits dans la mémoire ROM. La mémoire RAM sert à stocker des résultats de calcul. Le générateur G est utilisé pour les tirages au sort des divers nombres intervenant dans le procédé (r, D).

L'unité centrale et les mémoires peuvent être structurées comme le microcalculateur autoprogrammable monolithique décrit dans le brevet 4,382,279 des Etats-Unis d'Amérique.

La fonction de compression peut faire appel à l'algorithme DES (Data Encryption Standard). Il existe une carte à puce, fabriquée par PHILIPS qui réalise cet algorithme DES.

**Revendications**

1. Procédé d'authentification d'une accréditation à apport nul de connaissance,

   a) cette accréditation ayant été élaborée par un procédé du type à clé publique comprenant les opérations suivantes :

   - une autorité habilitée à délivrer des accréditations choisit deux nombres premiers, forme le produit N de ces deux nombres, tient secrets ces nombres, choisit un entier p et publie N et p;
   - pour chaque détenteur d'une accréditation, une identité numérique I est constituée, puis complétée par redondance pour former un mot J appelé identité ombragée,
   - une accréditation A est élaborée par l'autorité en prenant la racine pième de l'identité ombragée dans l'anneau des entiers modulo N ($A = J^{1/p} \bmod N$),
   - dans un support approprié contenant une mémoire, l'autorité charge l'inverse modulo N de l'accréditation A soit un nombre B appelé accréditation inverse ($B^p J \bmod N = 1$), ce nombre B constituant l'accréditation qu'il s'agit d'authentifier,

   b) l'authentification de l'accréditation ainsi élaborée, consistant en un processus numérique interactif et probabiliste du type à apport nul de connaissance et s'établissant entre un support contenant une accréditation, support appelé "le vérifié" et un organe d'authentification appelé "le vérificateur", ce processus comprenant au moins un traitement numérique constitué par les opérations connues suivantes :

   - le vérifié tire d'abord au hasard un entier r appartenant à l'anneau des entiers modulo N,
   - le vérifié élève cet entier r à la puissance p modulo N, le résultat étant appelé titre T,
   - le vérifié délivre alors au moins une partie des bits du titre T,
   - le vérificateur tire ensuite au hasard un nombre D et demande au vérifié d'effectuer certaines opérations sur r et sur l'accréditation inverse B, ces opérations étant liées au nombre D tiré au hasard par le vérificateur et effectuées dans l'anneau des entiers modulo N,
   - le vérifié délivre au vérificateur un nombre t, appelé témoin, résultat de ces opérations,
   - le vérificateur effectue à son tour des opérations portant sur le témoin t délivré par le vérifié et sur l'identité ombragée J du vérifié, opérations liées elles aussi au nombre D tiré au hasard par le vérificateur et effectuées dans l'anneau des entiers modulo N,
   - le vérificateur compare le résultat ainsi obtenu avec les bits du titre T que le vérifié a délivrés en début de processus de vérification, et admet l'authenticité de l'accréditation s'il retrouve ces bits,

   ce procédé étant caractérisé par le fait que :

   a) lors de l'élaboration de l'accréditation (B) le nombre p servant à extraire la racine p ième de l'identité ombragée (J) est choisi grand et comprend au moins une dizaine de bits,

   b) pour l'authentification de l'accréditation le processus ne comprend qu'un seul traitement interactif et probabiliste, ce traitement unique consistant dans les opérations suivantes :

   - le nombre D que le vérificateur tire au hasard est un entier compris entre 0 et p-1, bornes incluses,
   - l'opération que le vérifié effectue pour délivrer un témoin t est le produit, dans l'anneau des entiers modulo N, de l'élément r qu'il a lui même tiré au hasard, par la puissance Dième de l'accréditation inverse B, le témoin étant alors $t = r.B^D \bmod N$,
   - les opérations qu'effectue le vérificateur sont le produit, dans l'anneau des entiers modulo N, de la puissance p ième du témoin t par la puissance D ième de l'identité ombragée J, soit $t^p J^D \bmod N$,
   - l'opération de comparaison effectuée par le vérificateur porte alors sur les bits du titre T délivrés par le vérifié et sur les bits obtenus par l'opération précédente, l'authenticité de l'accréditation étant acquise en un seul traitement dès lors que tous les bits du titre délivrés par le vérifié sont retrouvés par le vérificateur dans $t^p$ $J^D$ mod N.

**2.** Procédé d'authentification d'un message, ce message provenant d'un donneur d'ordre censé être accrédité :

a) l'accréditation d'un donneur d'ordre consistant en un mot numérique B obtenu par un procédé à clé publique comprenant les opérations suivantes :

- une autorité habilitée à délivrer des accréditations choisit deux nombre premiers, forme le produit N de ces deux nombres, tient secrets ces deux nombres, choisit un entier p et publie N et p,

- pour chaque donneur d'ordre une identité numérique I est constituée puis complétée par redondance pour former un mot J appelé identité ombragée,

- une accréditation A est élaborée par l'autorité en prenant la racine p ième de l'identité ombragée J dans l'anneau des entiers modulo N, ($A = J^{1/p}$ mod N),

- dans un support approprié détenu par le donneur d'ordre l'autorité charge l'inverse modulo N de l'accréditation A, soit un nombre B appelé accréditation inverse ($B^p$ J mod N = 1),

b) l'authentification d'un message m émis par un donneur d'ordre ainsi accrédité consistant en un processus numérique interactif et probabiliste du type à apport nul de connaissance et s'établissant entre le support du donneur d'ordre censé accrédité et appelé "le vérifié" et un organe de vérification appelé "le vérificateur", ce processus comprenant au moins un traitement numérique constitué par les opérations suivantes :

- le vérifié tire d'abord au hasard un entier r appartenant à l'anneau des entiers modulo N,

- le vérifié élève cet entier r à la puissance p modulo N et calcule un résultat par une fonction de compression en prenant comme argument le message m et $r^p$ mod N, soit f(m, $r^p$ mod N), le résultat étant appelé titre T,

- le vérifié délivre alors au moins une partie des bits de titre T,

- le vérificateur tire ensuite au hasard un nombre D et demande au vérifié d'effectuer certains opérations sur r et sur l'accréditation inverse B, ces opérations étant liées au nombre D tiré au hasard par le vérificateur et étant effectuées dans l'anneau des entiers modulo N,

- le vérifié fournit au vérificateur un nombre t, appelé témoin, résultat de ces opérations,

- le vérificateur effectue à son tour des opérations portant sur le témoin t délivré par le vérifié et sur l'identité ombragée J du vérifié, opérations liées elles aussi au nombre D tiré au hasard par le vérificateur et effectuées dans l'anneau des entiers modulo N,

- le vérificateur forme une fonction de compression en prenant comme arguments le message à authentifier m et le résultat des opérations précédentes, soit f(m, t, J),

- le vérificateur compare le résultat de la fonction de compression obtenue avec le titre T que le vérifié a délivré en début de processus de vérification,

ce processus étant caractérisé par le fait que :

a) lors de l'élaboration de l'accréditation du donneur d'ordre, le nombre p servant à extraire la racine p ième de l'identité ombragée est choisi grand et comprend au moins une dizaine de bits,

b) pour l'authentification du message, le processus ne comprend qu'un seul traitement interactif et probabiliste (et non une répétition d'un tel traitement), ce traitement unique consistant dans les opérations suivantes :

- le nombre D que le vérificateur tire au hasard est un entier compris entre 0 et p-1, bornes incluses,

- l'opération que le vérifié effectue pour délivrer le témoin t est le produit, dans l'anneau des entiers modulo N, de l'élément r qu'il a lui même tiré, par la puissance Dième de l'accréditation inverse B, le témoin étant alors r.$B^D$ mod N,

- les opérations qu'effectue le vérificateur sont le produit, dans l'anneau des entiers modulo N, de la puissance p ième du témoin t, par la puissance D ième de l'identité ombragée J,

- le vérificateur forme la fonction de compression du message et du résultat des opérations précédentes soit f(m, $t^p$ $J^D$ mod N),

- la comparaison que le vérificateur effectue porte alors sur le résultat de la fonction de compression qu'il a obtenu et sur le titre T que le vérifié lui a délivré en début de processus de vérification, l'authenticité du message étant acquise en un seul traitement dès lors que, à la fin de ce traitement, il y a correspondance entre les bits du résultat de la fonction de compression obtenu par le vérificateur et les bits du titre délivrés par le vérifié.

3. Procédé de signature d'un message par une entité, cette entité étant censée être accréditée,

a) l'accréditation d'une entité signataire de messages ayant été élaborée par un procédé à clé publique comprenant les opérations suivantes :
- une autorité habilitée à délivrer des accréditations choisit deux nombres premiers, forme le produit N de ces deux nombres, tient secrets les deux nombres premiers, choisit un entier p et publie N et p,
- pour chaque entité signataire une identité numérique I est constituée puis complétée par redondance pour former un mot J appelé identité ombragée,
- une accréditation A est élaborée par l'autorité en prenant la racine p ième de l'identité ombragée J dans l'anneau des entiers modulo N ($A = J^{1/p}$ mod N),
- dans un support approprié détenu par le signataire l'autorité charge l'inverse modulo N de l'accréditation A, soit un nombre B appelé accréditation inverse ($B^p J$ mod N = 1),

b) la signature d'un message m par un signataire d'identité I consistant en un traitement numérique probabiliste comprenant les opérations suivantes :
- le signataire tire au hasard au moins un entier r appartenant à l'anneau des entiers modulo N,
- le signataire élève cet entier r à la puissance p modulo N,
- le signataire calcule le résultat d'une fonction de compression f en prenant comme arguments le message m à signer et la puissance $r^p$ obtenue,
- le signataire forme au moins un témoin t en effectuant certaines opérations sur r et sur l'accréditation inverse B, ces opérations étant liées au nombre D et étant effectuées dans l'anneau des entiers modulo N,
- le signataire transmet le message m, son identité I, le mot D, le témoin t, l'ensemble constituant un message signé,

ce procédé étant caractérisé par le fait que :

a) lors de l'élaboration de l'accréditation du signataire le nombre p servant à extraire la racine p ième de l'identité ombragée est choisi grand et comprend plusieurs dizaines de bits,

b) pour l'opération de signature du message :
- le signataire ne tire au hasard qu'un seul entier r appartenant à l'anneau des entiers modulo N,
- la fonction de compression a pour arguments le message m et le puissance p ième de r, ce qui fournit un nombre D,
- le témoin unique produit par le signataire est le produit, dans l'anneau des entiers modulo N, de l'entier r par la puissance D ième de l'accréditation inverse B,
- le signataire fournit, avec le message m, son identité I, le mot D et le témoin t.

4. Système d'authentification d'une accréditation à apport nul de connaissance comprenant,

a) des moyens pour élaborer cette accréditation par un procédé du type à clé publique, ces moyens comprenant :
- chez une autorité habilitée à délivrer des accréditations des moyens pour choisir deux nombres premiers, pour former le produit N de ces deux nombres, pour tenir secrets ces nombres, pour choisir un entier p et pour publier N et p ;
- des moyens pour constituer, pour chaque détenteur d'une accréditation, une identité numérique I et pour compléter cette identité par redondance pour former un mot J appelé identité ombragée,
- des moyens pour élaborer une accréditation A, ces moyens étant aptes à prendre la racine pième de l'identité ombragée dans l'anneau des entiers modulo N ($A = J^{1/p}$ mod N),
- un support approprié contenant une mémoire, où est chargé l'inverse modulo N de l'accréditation A soit un nombre B appelé accréditation inverse ($B^p J$ mod N = 1), ce nombre B constituant l'accréditation qu'il s'agit d'authentifier,

b) des moyens d'authentification de l'accréditation comprenant des moyens pour mettre en oeuvre un processus numérique interactif et probabiliste du type à apport nul de connaissance et s'établissant entre un support contenant une accréditation, support appelé "le vérifié" et un organe d'authentification appelé "le vérificateur", ces moyens comprenant :

- un moyen dans le vérifié pour tirer d'abord au hasard un entier r appartenant à l'anneau des entiers modulo N,
- un moyen dans le vérifié pour élever cet entier r à la puissance p modulo N, le résultat étant appelé titre T,
- des moyens dans le vérifié pour délivrer alors au moins une partie des bits du titre T,
- des moyens dans le vérificateur pour tirer ensuite au hasard un nombre D et demander au vérifié d'effectuer certaines opérations sur r et sur l'accréditation inverse B, ces opérations étant liées au nombre D tiré au hasard par les moyens du vérificateur et effectuées dans l'anneau des entiers modulo N,
- des moyens dans le vérifié pour délivrer au vérificateur un nombre t, appelé témoin, résultat de ces opérations,
- des moyens dans le vérificateur pour effectuer à son tour des opérations portant sur le témoin t délivré par le vérifié et sur l'identité ombragée J du vérifié, opérations liées elles aussi au nombre D tiré au hasard par le vérificateur et effectuées dans l'anneau des entiers modulo N,
- des moyens dans le vérificateur pour comparer le résultat ainsi obtenu avec les bits du titre T que les moyens du vérifié ont délivrés en début de processus de vérification, et admettre l'authenticité de l'accréditation s'il retrouve ces bits,

ce système étant caractérisé par le fait que :

a) dans les moyens pour élaborer l'accréditation B les moyens pour choisir le nombre p servant à extraire la racine p ième de l'identité ombragée J sont aptes à choisir un nombre grand comprenant au moins une dizaine de bits,

b) dans les moyens pour l'authentification de l'accréditation, les moyens sont aptes à n'effectuer qu'un seul traitement interactif et probabiliste (et non une répétition d'un tel traitement), ces moyens consistant alors en :

- des moyens pour que le nombre D que le vérificateur tire au hasard soit un entier compris entre 0 et p-1, bornes incluses,
- des moyens dans le vérifié pour délivrer un témoin t sont aptes à former le produit, dans l'anneau des entiers modulo N, de l'élément r tiré au hasard, par la puissance Dième de l'accréditation inverse B, le témoin étant alors $t = r.B^D \bmod N$,
- des moyens dans le vérificateur aptes à calculer le produit, dans l'anneau des entiers modulo N, de la puissance p ième du témoin t par la puissance D ième de l'identité ombragée J, soit $t^p J^D \bmod N$,
- des moyens de comparaison dans le vérificateur aptes à comparer les bits du titre T délivrés par les moyens du vérifié et sur les bits obtenus par l'opération précédente, l'authenticité de l'accréditation étant acquise en un seul traitement dès lors que tous les bits du titre délivrés par le vérifié sont retrouvés par le vérificateur dans $t^p J^D \bmod N$.

**5.** système d'authentification d'un message, ce message provenant d'un donneur d'ordre censé être accrédité, ce système comprenant :

a) des moyens disposés chez un donneur d'ordre pour former un mot numérique B obtenu par un procédé à clé publique et comprenant les moyens suivants :

- des moyens chez une autorité habilitée à délivrer des accréditations pour choisir deux nombre premiers, pour former le produit N de ces deux nombres, pour tenir secrets ces deux nombres, pour choisir un entier p et pour publier N et p,
- des moyens pour constituer, pour chaque donneur d'ordre, une identité numérique I et pour compléter par redondance cette identité pour former un mot J appelé identité ombragée,
- des moyens pour élaborer une accréditation A par l'autorité et pour prendre la racine p ième de l'identité ombragée J dans l'anneau des entiers modulo N, ($A = J^{1/p} \bmod N$),
- un support approprié détenu par le donneur d'ordre, l'autorité chargeant dans ce support l'inverse modulo N de l'accréditation A, soit un nombre B appelé accréditation inverse ($B^p J \bmod N = 1$),

b) des moyens d'authentification d'un message m émis par un donneur d'ordre ainsi accrédité comprenant des moyens de mise en oeuvre d'un processus numérique interactif et probabiliste du type à apport nul de connaissance et s'établissant entre le support du donneur d'ordre censé accrédité et appelé "le vérifié" et un organe de vérification appelé "le vérificateur", ces moyens comprenant :

- des moyens dans le vérifié pour tirer d'abord au hasard un entier r appartenant à l'anneau des entiers modulo N,
- des moyens dans le vérifié pour élever cet entier r à la puissance p modulo N et calculer un résultat par une fonction de compression en prenant comme argument le message m et $r^p$ mod N, soit $f(m, r^p \text{ mod } N)$, le résultat étant appelé titre T,
- des moyens dans le vérifié pour délivrer alors au moins une partie des bits du titre T,
- des moyens dans le vérificateur pour tirer ensuite au hasard un nombre D et demander aux moyens du vérifié d'effectuer certaines opérations sur r et sur l'accréditation inverse B, ces opérations étant liées au nombre D tiré au hasard par le vérificateur et étant effectuées dans l'anneau des entiers modulo N,
- des moyens dans le vérifié pour fournir au vérificateur un nombre t, appelé témoin, résultat de ces opérations,
- des moyens dans le vérificateur pour effectuer à son tour des opérations portant sur le témoin t délivré par les moyens du vérifié et sur l'identité ombragée J du vérifié, opérations liées elles aussi au nombre D tiré au hasard par le vérificateur et effectuées dans l'anneau des entiers modulo N,
- des moyens dans le vérificateur pour former une fonction de compression en prenant comme arguments le message à authentifier m et le résultat des opérations précédentes, soit $f(m, t, J)$,
- des moyens dans le vérificateur pour comparer la fonction de compression obtenue avec le titre T que le vérifié a délivré en début de processus de vérification,

ce système étant caractérisé par le fait que :

a) dans les moyens d'élaboration de l'accréditation du donneur d'ordre, le nombre p servant à extraire la racine p ième de l'identité ombragée est choisi grand et comprend au moins une dizaine de bits,

b) dans les moyens d'authentification du message, les moyens sont aptes à mettre en oeuvre un processus qui ne comprend qu'un seul traitement interactif et probabiliste (et non une répétition d'un tel traitement), ces moyens comprenant :

- des moyens dans le vérificateur pour tirer au hasard comme nombre D un entier compris entre 0 et p-1, bornes incluses,
- des moyens dans le vérifié pour délivrer le témoin t qui soit le produit, dans l'anneau des entiers modulo N, de l'élément r qu'il a lui même tiré, par la puissance Dième de l'accréditation inverse B, le témoin étant alors $r.B^D$ mod N,
- des moyens dans vérificateur pour effectuer le produit, dans l'anneau des entiers modulo N, de la puissance p ième du témoin t, par la puissance D ième de l'identité ombragée J,
- des moyens dans le vérificateur pour former la fonction de compression du message et du résultat des opérations précédentes soit $f(m, t^p J^D \text{ mod } N)$,
- les moyens de comparaison dans le vérificateur portant alors sur le résultat de la fonction de compression que les moyens du vérificateur ont obtenu et sur le titre T que les moyens du vérifié lui ont délivré en début de processus de vérification, l'authenticité du message étant acquise en un seul traitement dès lors que, à la fin de ce traitement, il y a correspondance entre tous les bits du resultat de la fonction de compression obtenu par le vérificateur et les bits du titre délivrés par le vérifié.

6. Système pour signer un message par une entité, cette entité étant censée être accréditée, ce système comprenant,

a) des moyens pour élaborer une accréditation d'une entité signataire de messages, ces moyens mettant en oeuvre un procédé à clé publique et comprenant :

- des moyens chez une autorité habilitée à délivrer des accréditations pour choisir deux nombres premiers, pour former le produit N de ces deux nombres, pour tenir secrets les deux nombres premiers, pour choisir un entier p et pour publier N et p,
- des moyens pour constituer, pour chaque entité signataire, une identité numérique I et pour compléter par redondance cette identité pour former un mot J appelé identité ombragée,

- des moyens pour élaborer une accréditation A par l'autorité, ces moyens étant aptes à prendre la racine p ième de l'identité ombragée J dans l'anneau des entiers modulo N (A = J$^{1/p}$ mod N),

- un support approprié détenu par la signataire où l'autorité peut charger l'inverse modulo N de l'accréditation A, soit un nombre B appelé accréditation inverse (B$^p$ J mod N = 1),

b) des moyens pour constituer la signature d'un message m par un signataire d'identité I et comprenant :

- des moyens chez le signataire pour tirer au hasard au moins un entier r appartenant à l'anneau des entiers modulo N,

- des moyens chez le signataire pour élever cet entier r à la puissance p modulo N,

- des moyens chez le signataire pour calculer le résultat une fonction de compression f en prenant comme arguments le message m à signer et la puissance r$^p$ obtenue,

- des moyens chez le signataire pour former au moins un témoin t en effectuant certaines opérations sur r et sur l'accréditation inverse B, ces opérations étant liées au nombre d tire au hasard et étant effectuées dans l'anneau des entiers modulo N,

- des moyens chez le signataire pour transmettre le message m, son identité I, le mot D, le témoin t, l'ensemble constituant un message signé,

ce système étant caractérisé par le fait que :

a) dans les moyens d'élaboration de l'accréditation du signataire les moyens pour choisir le nombre p servant à extraire la racine p ième de l'identité ombragée sont aptes à choisir un nombre grand comprenant plusieurs dizaines de bits,

b) dans les moyens pour l'opération de signature du message :

- les moyens du signataire ne tirent au hasard qu'un seul entier r appartenant à l'anneau des entiers modulo N,

- les moyens de compression opèrent avec des arguments qui sont le message m et la puissance p ième de r, ce qui fournit un nombre D,

- les moyens pour produire le témoin unique par le signataire sont aptes à former le produit, dans l'anneau des entiers modulo N, de l'entier r par la puissance D ième de l'accréditation inverse B,

- les moyens du signataire fournissent, avec le message m, sont identité I, le mot D et le témoin t.

## Claims

1. Method of authentication of an accreditation with nil contribution to recognition,

a) this accreditation having been derived by a method of the public-key type comprising the following operations:

- an authority which is entitled to deliver accreditations chooses two prime numbers, forms the product N of these two numbers, keeps these numbers secret, chooses an integer p and publishes N and p;

- for each holder of an accreditation, a numerical identity I is constituted, then completed by redundancy in order to form a word J called protected identity,

- an accreditation A is derived by the authority by taking the p$^{th}$ root of the protected identity in the ring of integers modulo N (A = J$^{1/p}$ mod N),

- in an appropriate medium containing a memory, the authority loads the modulo N inverse of the accreditation A i.e a number B called inverse accreditation (B$^p$J mod N = 1), this number B constituting the accreditation which it is a question of authenticating,

b) the authentication of the accreditation thus derived, consisting in a probabilistic and interactive numerical process of the type with nil contribution to recognition taking place between a medium containing an accreditation, called "the verified subject", and an authentication member called "the verifier", this process comprising at least one numerical processing constituted by the following known operations:

- the verified subject first of all draws at random an integer r belonging to the ring of integers modulo N,

- the verified subject raises this integer r to the power p modulo N, the result being called title T,

- the verified subject then delivers at least some of the bits of the title T,

- the verifier next draws at random a number D and asks the verified subject to effect certain operations on r and on the inverse accreditation B, these operations being linked to the number D drawn at random by the verifier and the operations being effected in the ring of integers modulo N,

- the verified subject delivers to the verifier a number t, called witness, which is the result of these operations,
- the verifier in turn effects operations concerning the witness t delivered by the verified subject and the protected identity J of the verified subject, these operations being themselves linked to the number D drawn at random by the verifier and being effected in the ring of integers modulo N,
- the verifier compares the result thus obtained with the bits of the title T which the verified subject has delivered at the start of the verification process and admits the authenticity of the accreditation if it finds these bits again,

this method being characterised in that:

a) during the derivation of the accreditation (B) the number p serving to extract the $p^{th}$ root from the protected identity (J) is chosen to be large and comprises at least ten bits or so,

b) for the authentication of the accreditation the process comprises only one single probabilistic and interactive processing, this single processing consisting of the following operations:

- the number D which the verifier draws at random is an integer between 0 and p-1 inclusive,
- the operation which the verified subject effects in order to deliver a witness t is the product, in the ring of integers modulo N, of the element r, which it has itself drawn at random, and the $D^{th}$ power of the inverse accreditation B, the witness then being $t = r.B^D \bmod N$,
- the operations which the verifier effects are the product, in the ring of integers modulo N, of the $p^{th}$ power of the witness t and the $D^{th}$ power of the protected identity J, i.e. $t^p J^D \bmod N$,
- the comparison operation effected by the verifier then concerns the bits of the title T delivered by the verified subject and the bits obtained by the preceding operation, the authenticity of the accreditation being acquired in a single processing as soon as all the bits of the title delivered by the verified subject are found again by the verifier in $t^p J^D \bmod N$.

2. Method of authentication of a message, this message originating from a supposedly accredited giver of an order:

a) the accreditation of a giver of an order consisting of a digital word B obtained by a public-key method comprising the following operations:

- an authority which is entitled to deliver accreditations chooses two prime numbers, forms the product N of these two numbers, keeps these two numbers secret, chooses an integer p and publishes N and p,
- for each giver of an order a numerical identity I is constituted, then completed by redundancy in order to form a word J called protected identity,
- an accreditation A is derived by the authority by taking the $p^{th}$ root of the protected identity J in the ring of integers modulo N, ($A = J^{1/p} \bmod N$),
- in an appropriate medium held by the giver of an order the authority loads the modulo N inverse of the accreditation A, i.e. a number B called inverse accreditation ($B^p J \bmod N = 1$),

b) the authentication of a message m sent by a giver of an order thus accredited consisting in a probabilistic and interactive numerical process of the type with nil contribution to recognition taking place between the medium of the supposedly accredited giver of an order and called "the verified subject", and a verification member called "the verifier", this process comprising at least one numerical processing constituted by the following operations:

- the verified subject first of all draws at random an integer r belonging to the ring of integers modulo N,
- the verified subject raises this integer r to the power p modulo N and calculates a result via a compression function taking as argument the message m and $r^p \bmod N$, i.e. $f(m, r^p \bmod N)$, the result being called title T,
- the verified subject then delivers at least some of the bits of the title T,
- the verifier next draws at random a number D and asks the verified subject to effect certain operations on r and on the inverse accreditation B, these operations being linked to the number D drawn at random by the verifier and the operations being effected in the ring of integers modulo N,

- the verified subject delivers to the verifier a number t, called witness, which is the result of these operations,
- the verifier in turn effects operations concerning the witness t delivered by the verified subject and the protected identity J of the verified subject, these operations being themselves linked to the number D drawn at random by the verifier and being effected in the ring of integers modulo N,
- the verifier forms a compression function by taking as arguments the message to be authenticated m and the result of the preceding operations, i.e. $f(m, t, J)$,
- the verifier compares the result of the compression function obtained with the title T which the verified subject has delivered at the start of the verification process,

this process being characterised in that:

a) during the derivation of the accreditation of the giver of an order, the number p serving to extract the $p^{th}$ root of the protected identity is chosen to be large and comprises at least ten bits or so,

b) for the authentication of the message, the process comprises only one single probabilistic and interactive processing (and not a repetition of such a processing), this single processing consisting of the following operations:

- the number D which the verifier draws at random is an integer between 0 and p-1 inclusive,
- the operation which the verified subject effects in order to deliver the witness t is the product, in the ring of integers modulo N, of the element r, which it has itself drawn, and the $D^{th}$ power of the inverse accreditation B, the witness then being $r.B^D \bmod N$,
- the operations which the verifier effects are the product, in the ring of integers modulo N, of the $p^{th}$ power of the witness t, and the $D^{th}$ power of the protected identity J,
- the verifier forms the compression function of the message and of the result of the preceding operations i.e. $f(m, t^p J^D \bmod N)$,
- the comparison which the verifier effects then concerns the result of the compression function which it has obtained and the title T which the verified subject has delivered to it at the start of the verification process, the authenticity of the message being acquired in a single processing as soon as, at the end of this processing, there is correspondence between the bits of the result of the compression function obtained by the verifier and the bits of the title delivered by the verified subject.

3. Method of signing a message by an entity, this entity being supposed to be accredited,

a) the accreditation of an entity which is a signatory of messages having been derived by a public-key method comprising the following operations:

- an authority which is entitled to deliver accreditations chooses two prime numbers, forms the product N of these two numbers, keeps these two prime numbers secret, chooses an integer p and publishes N and p,
- for each signatory entity a numerical identity I is constituted, then completed by redundancy in order to form a word J called protected identity,
- an accreditation A is derived by the authority by taking the $p^{th}$ root of the protected identity J in the ring of integers modulo N ($A = J^{1/p} \bmod N$),
- in an appropriate medium held by the signatory the authority loads the modulo N inverse of the accreditation A, i.e. a number B called inverse accreditation ($Bp J \bmod N = 1$),

b) the signing of a message m by a signatory of identity I consisting in a probabilistic digital processing comprising the following operations:

- the signatory draws at random an integer r belonging to the ring of integers modulo N,
- the signatory raises this integer r to the power p modulo N,
- the signatory calculates the result of a compression function f by taking as arguments the message m to be signed and the power $r^p$ obtained,
- the signatory forms at least one witness t by effecting certain operations on r and on the inverse accreditation B, these operations being linked to the number D and being effected in the ring of integers modulo N,
- the signatory transmits the message m, its identity I, the word D, the witness t, the whole constituting a signed message,

this method being characterised in that :

a) during the derivation of the accreditation of the signatory the number p serving to extract the $p^{th}$ root of the protected identity is chosen to be large and comprises several tens of bits,

b) for the operation of the signing of the message :

- the signatory draws at random only one single integer r belonging to the ring of integers modulo N,

- the compression function has as arguments the message m and the $p^{th}$ power of r, which produces a number D,

- the unique witness produced by the signatory is the product, in the ring of integers modulo N, of the integer r and the $D^{th}$ power of the inverse accreditation B,

- the signatory supplies, with the message m, its identity I, the word D and the witness t.

4. System for authentication of an accreditation with nil contribution to recognition comprising,

a) means for deriving this accreditation by a method of the public-key type, these means comprising :

- located with an authority which is entitled to deliver accreditations, means for choosing two prime numbers, for forming the product N of these two numbers, for keeping these two numbers secret, for choosing an integer p and for publishing N and p;

- means for constituting, for each holder of an accreditation, a numerical identity I and for completing this identity by redundancy in order to form a word J called protected identity,

- means for deriving an accreditation A, these means being able to take the $p^{th}$ root of the protected identity in the ring of integers modulo N ($A = J^{1/p}$ mod N),

- an appropriate medium containing a memory, where the modulo N inverse of the accreditation A, i.e. a number B called inverse accreditation ($B^pJ$ mod N = 1) is loaded, this number B constituting the accreditation which it is a question of authenticating,

b) means of authentication of the accreditation comprising means for employing a probabilistic and interactive numerical process of the type with nil contribution to recognition taking place between a medium containing an accreditation, called "the verified subject", and an authentication member called "the verifier", these means comprising :

- a means in the verified subject for first of all drawing at random an integer r belonging to the ring of integers modulo N,

- a means in the verified subject for raising this integer r to the power p modulo N, the result being called title T,

- means in the verified subject for then delivering at least some of the bits of the title T,

- means in the verifier for then drawing at random a number D and asking the verified subject to effect certain operations on r and on the inverse accreditation B, these operations being linked to the number D drawn at random by the means of the verifier and the operations being effected in the ring of integers modulo N,

- means in the verified subject for delivering to the verifier a number t, called witness, which is the result of these operations,

- means in the verifier for effecting in turn operations concerning the witness t delivered by the verified subject and the protected identity J of the verified subject, these operations being themselves linked to the number D drawn at random by the verifier and being effected in the ring of integers modulo N,

- means in the verifier for comparing the result thus obtained with the bits of the title T which the means of the verified subject have delivered at the start of the verification process, and for admitting the authenticity of the accreditation if it finds these bits again,

this system being characterised in that:

a) in the means for deriving the accreditation B, the means for choosing the number p serving to extract the $p^{th}$ root of the protected identity J are able to choose a large number comprising at least ten bits or so,

b) in the means for the authentication of the accreditation, the means are able to effect only one single probabilistic and interactive processing (and not a repetition of such a processing), these means then consisting in:

- means so that the number D which the verifier draws at random is an integer between 0 and p-1 inclusive,
- means in the verified subject for delivering a witness t are able to form the product, in the ring of integers modulo N, of the element r drawn at random, and the $D^{th}$ power of the inverse accreditation B, the witness then being $t = r.B^D \bmod N$,
- means in the verifier able to calculate the product, in the ring of integers modulo N, of the $p^{th}$ power of the witness t and the $D^{th}$ power of the protected identity j, i.e. $t^p J^D \bmod N$,
- means of comparison in the verifier able to compare the bits of the title T delivered by the means of the verified subject and the bits obtained by the preceding operation, the authenticity of the accreditation being acquired in one single processing as soon as all the bits of the title delivered by the verified subject are found again by the verifier in $t^p J^D \bmod N$.

5. System for authentication of a message, this message originating from a supposedly accredited giver of an order, this system comprising :

a) means located with a giver of an order in order to form a digital word B obtained by a public-key method and comprising the following means :

- means located with an authority which is entitled to deliver accreditations for choosing two prime numbers, for forming the product N of these two numbers, for keeping these two numbers secret, for choosing an integer p and for publishing N and p,
- means for constituting, for each giver of an order, a numerical identity I and for completing this identity by redundancy in order to form a word J called protected identity,
- means for deriving an accreditation A by the authority and for taking the $p^{th}$ root of the protected identity J in the ring of integers modulo N, $(A = J^{1/p} \bmod N)$,
- an appropriate medium held by the giver of an order, the authority loading into this medium the modulo N inverse of the accreditation A, i.e. a number B called inverse accreditation

$(B^p J \bmod N = 1)$,

b) means of authentication of a message m sent by a giver of an order thus accredited comprising means for employing a probabilistic and interactive numerical process of the type with nil contribution to recognition taking place between the medium of the supposedly accredited giver of an order called "the verified subject" and a verification member called "the verifier", these means comprising :

- means in the verified subject for first of all drawing at random an integer r belonging to the ring of integers modulo N,
- means in the verified subject for raising this integer r to the power p modulo N and calculating a result by a compression function by taking as argument the message m and $r^p \bmod N$, i.e. $f(m, r^p \bmod N)$, the result being called title T,
- means in the verified subject for then delivering at least some of the bits of the title T,
- means in the verifier for then drawing at random a number D and asking the means of the verified subject to effect certain operations on r and on the inverse accreditation B, these operations being linked to the number D drawn at random by the verifier and the operations being effected in the ring of integers modulo N,
- means in the verified subject for delivering to the verifier a number t, called witness, which is the result of these operations,
- means in the verifier for effecting in turn operations concerning the witness t delivered by the means of the verified subject and the protected identity J of the verified subject, these operations being themselves also linked to the number D drawn at random by the verifier and being effected in the ring of integers modulo N,
- means in the verifier for forming a compression function by taking as arguments the message to be authenticated m and the result of the preceding operations, i.e. $f(m, t, J)$,
- means in the verifier for comparing the compression function obtained with the title T which the verified subject has delivered at the start of the verification process,

this system being characterised in that :

a) in the means for deriving the accreditation of the giver of an order, the number p serving to extract the $p^{th}$ root of the protected identity is chosen to be large and comprises at least ten bits or so,

b) in the means for the authentication of the message, the means are able to employ a process which comprises only one single probabilistic and interactive processing (and not a repetition of such a processing), these means comprising :

- means in the verifier for drawing at random as a number D an integer between 0 and p-1 inclusive,
- means in the verified subject for delivering the witness t which is the product, in the ring of integers modulo N, of the element r, which it has itself drawn, and the $D^{th}$ power of the inverse accreditation B, the witness then being $r.B^D$ mod N,
- means in verifier for effecting the product, in the ring of integers modulo N, of the $p^{th}$ power of the witness t, and the $D^{th}$ power of the protected identity J,
- means in the verifier for forming the compression function of the message and of the result of the preceding operations, i.e. $f(m, t^p J^D$ mod N),
- the means of comparison in the verifier then concerning the result of the compression function that the means of the verifier have obtained and the title T that the means of the verified subject have delivered to it at the start of the verification process, the authenticity of the message being acquired in one single processing as soon as, at the end of this processing, there is correspondence between all the bits of the result of the compression function obtained by the verifier and the bits of the title delivered by the verified subject.

6. System for signing a message by an entity, this entity being supposed to be accredited, this system comprising,

a) means for deriving an accreditation of an entity that is a signatory of messages, these means employing a public-key method and comprising :

- means located with an authority which is entitled to deliver accreditations for choosing two prime numbers, for forming the product N of these two numbers, for keeping the two prime numbers secret, for choosing an integer p and for publishing N and p,

- means for constituting, for each signatory entity, a numerical identity I and for completing this identity by redundancy in order to form a word J called protected identity,
- means for deriving an accreditation A by the authority, these means being able to take the $p^{th}$ root of the protected identity J in the ring of integers modulo N ($A = J^{1/p}$ mod N),
- an appropriate medium held by the signatory where the authority can load the modulo N inverse of the accreditation A, i.e. a number B called inverse accreditation ($B^p$ J mod N = 1),

b) means for constituting the signature of a message m by a signatory of identity I and comprising :

- means located with the signatory for drawing at random at least one integer r belonging to the ring of integers modulo N,
- means located with the signatory for raising this integer r to the power p modulo N,
- means located with the signatory for calculating the result [lacuna] a compression function f by taking as arguments the message m to be signed and the power $r^p$ obtained,
- means located with the signatory for forming at least one witness t by effecting certain operations on r and on the inverse accreditation B, these operations being linked to the number d drawn at random and the operations being effected in the ring of integers modulo N,
- means located with the signatory for transmitting the message m, its identity I, the word D, the witness t, the whole constituting a signed message,

this system being characterised in that :

a) in the means for deriving the accreditation of the signatory, the means for choosing the number p serving to extract the $p^{th}$ root of the protected identity are able to choose a large number comprising several tens of bits,

b) in the means for the operation of signing the message:

- the means of the signatory draw at random only one single integer r belonging to the ring of integers modulo N,
- the means of compression operate with arguments which are the message m and the $p^{th}$ power of r, which provides a number D,
- the means for producing the unique witness by the signatory are able to form the product, in the ring of integers modulo N, of the integer r and the $D^{th}$ powerof the inverse accreditation B,
- the means of the signatory provide, with the message m, its identity I, the word D and the witness t.

**Patentansprüche**

1. Verfahren zum Beglaubigen einer Vollmacht mit einem Null-Kenntnis-System,

a) wobei diese Vollmacht durch ein Verfahren des Typs mit einem öffentlichen Schlüssel mit den folgenden Verfahrensschritten ausgearbeitet wurde:
- ein Bevollmächtigter, der berechtigt ist, Vollmachten auszustellen, wählt zwei erste Zahlen, bildet das Produkt N dieser beiden Zahlen, hält diese Zahlen geheim, wählt eine ganze Zahl p und veröffentlicht N und p;
- für jeden Inhaber einer Vollmacht wird eine numerische Identität I gebildet, die anschließend redundant vervollständigt wird, um ein Wort J zu bilden, das verhüllte Identität genannt wird,
- eine Vollmacht A wird durch den Bevollmächtigten ausgearbeitet, indem die p-te Wurzel der verhüllten Identität in dem Ring der ganzen Zahlen N (A = $J^{1/p}$ mod N) gezogen wird,
- in einen geeigneten Träger mit einem Speicher lädt der Bevollmächtigte den Kehrwert modulo N der Vollmacht A, also eine Zahl B, die inverse Vollmacht genannt wird ($B^p J$ mod N = 1), wobei diese Zahl B die Vollmacht ist, die es zu beglaubigen gilt,

b) wobei die Beglaubigung der so ausgearbeiteten Vollmacht aus einem interaktiven und probabilistischem, numerischen Verfahren des Typs mit einem Null-Kenntnis-System besteht und zwischen einem eine Vollmacht enthaltenden Träger, der "der Verifizierte" genannt wird, und einem Beglaubigungsorgan, das "der Verifizierende" genannt wird, stattfindet, wobei dieses Verfahren wenigstens eine numerische Bearbeitung durch die folgenden, bekannten Operationen umfaßt:
- der Verifizierte zieht zunächst zufällig eine ganze Zahl r, die zu dem Ring der ganzen Zahlen modulo N gehört,
- der Verifizierte erhebt diese ganze Zahl in die Potenz p modulo N, wobei das Ergebnis Titel T genannt wird,
- der Verifizierte händigt wenigstens einen Teil der Bits des Titels T aus,
- der Verifizierende zieht anschließend zufällig eine Zahl D und fordert den Verifizierten auf, bestimmte Operationen auf r und auf die inverse Vollmacht B auszuführen, wobei die Operationen mit der zufällig von dem Verifizierenden gezogenen Zahl D verbunden sind und in dem Ring der ganzen Zahlen modulo N durchgeführt werden,
- der Verifizierte händigt an den Verifizierenden eine Zahl t, Zeuge genannt, die das Resultat dieser Operationen ist, aus,
- der Verifizierende führt seinerseits auf dem von dem Verifizierten ausgehändigten Zeugen t und auf der verhüllten Identität J des Verifizierten Operationen durch, wobei die Operationen ihrerseits auch mit der zufällig von dem Verifizierenden gezogenen Zahl D verbunden sind und in dem Ring der ganzen Zahlen modulo N durchgeführt werden,
- der Verifizierende vergleicht das so erhaltene Ergebnis mit den Bits des Titels T, den der Verifizierte zu Beginn des Verifizierungsprozesses ausgehändigt hat, und läßt die Beglaubigung der Vollmacht zu, wenn er diese Bits wiederfindet,

wobei dieses Verfahren gekennzeichnet ist durch die Tatsache, daß:

a) bei der Ausarbeitung der Vollmacht (B) die Zahl p, die zum Ziehen der p-ten Wurzel der verhüllten Identität (J) dient, groß gewählt wird und wenigsten etwa zehn Bits umfaßt,

b) für die Beglaubigung der Vollmacht das Verfahren nur eine interaktive und probabilistische Bearbeitung aufweist, wobei die einzige Bearbeitung aus den folgenden Operationen besteht:
- die Zahl D, die der Verifizierende zufällig zieht, ist eine ganze Zahl zwischen 0 und p-1, die Grenzen eingeschlossen,
- die Operation, die der Verifizierte durchführt, um einen Zeugen t auszuhändigen, ist das Produkt in dem Ring der ganzen Zahlen modulo N des Elements r, das er selbst zufällig gezogen hat, mit der D-ten Potenz der inversen Vollmacht B, wobei der Zeuge also $t = r \cdot B^D$ mod N ist,

- die Operationen, die der Verifizierende durchführt, ist das Produkt im Ring der ganzen Zahlen modulo N der p-ten Potenz des Zeugen t mit der D-ten Potenz der verhüllten Identität J, also $t^p J^D$ mod N,

- die von dem Verifizierenden durchgeführte Vergleichsoperation bezieht sich zunächst auf die Bits des von dem Verifizierten ausgehändigten Titels T und auf die durch die vorhergehende Operation erhaltenen Bits, wobei die Beglaubigung der Vollmacht in einer einzigen Bearbeitung erhalten wird, sobald alle Bits des von dem Verifizierten ausgehändigten Titels von dem Verifizierenden in $t^p J^D$ mod N wiedergefunden werden.

2. Verfahren zum Beglaubigen einer Nachricht, wobei diese Nachricht von einem Befehlsgeber kommt, der bevollmächtigt sein soll,

a) wobei diese Vollmacht des Befehlsgebers aus einem numerischen Wort B besteht, das durch ein Verfahren mit einem öffentlichen Schlüssel mit den folgenden Verfahrensschritten erhalten wurde:

- ein Bevollmächtigter, der berechtigt ist, Vollmachten auszustellen, wählt zwei erste Zahlen, bildet das Produkt N dieser beiden Zahlen, hält diese Zahlen geheim, wählt eine ganze Zahl p und veröffentlicht N und p;

- für jeden Befehlsgeber wird eine numerische Identität I gebildet, die anschließend redundant vervollständigt wird, um ein Wort J zu bilden, das verhüllte Identität genannt wird,

- eine Vollmacht A wird durch den Bevollmächtigten ausgearbeitet, indem die p-te Wurzel der verhüllten Identität in dem Ring der ganzen Zahlen N ($A = J^{1/p}$ mod N) gezogen wird,

- in einen geeigneten Träger, den der Befehlsgeber besitzt, lädt der Bevollmächtigte den Kehrwert modulo N der Vollmacht A, also eine Zahl B, die inverse Vollmacht genannt wird ($B^p J$ mod N = 1),

b) wobei die Beglaubigung der von einem so bevollmächtigten Befehlsgeber ausgesandten Nachricht aus einem interaktiven und probabilistischem, numerischen Verfahren des Typs mit einem Null-Kenntnis-System besteht und zwischen dem Träger des als bevollmächtigt anerkannten Befehlsgebers, der "der Verifizierte" genannt wird, und einem Beglaubigungsorgan, das "der Verifizierende" genannt wird, stattfindet, wobei dieses Verfahren wenigstens eine numerische Bearbeitung durch die folgenden, bekannten Operationen umfaßt:

- der Verifizierte zieht zunächst zufällig eine ganze Zahl r, die zu dem Ring der ganzen Zahlen modulo N gehört,

- der Verifizierte erhebt diese ganze Zahl r in die Potenz p modulo N und berechnet ein Ergebnis durch eine Komprimierungsfunktion, indem er als Argument die Nachricht m und $r^p$ mod N nimmt, also $f(m, r^p$ mod N), wobei das Ergebnis Titel T genannt wird,

- der Verifizierte händigt wenigstens einen Teil der Bits des Titels T aus,

- der Verifizierende zieht anschließend zufällig eine Zahl D und fordert den Verifizierten auf, bestimmte Operationen auf r und auf die inverse Vollmacht B anzuwenden, wobei die Operationen mit der zufällig von dem Verifizierenden gezogenen Zahl D verbunden sind und in dem Ring der ganzen Zahlen modulo N durchgeführt werden,

- der Verifizierte händigt an den Verifizierenden eine Zahl t, Zeuge genannt, die das Resultat dieser Operationen ist, aus,

- der Verifizierende führt seinerseits auf dem von dem Verifizierten ausgehändigten Zeugen t und auf der verhüllten Identität J des Verifizierten Operationen durch, wobei die Operationen ihrerseits auch mit der zufällig von dem Verifizierenden gezogenen Zahl D verbunden sind und in dem Ring der ganzen Zahlen modulo N durchgeführt werden,

- der Verifizierende bildet eine Komprimierungsfunktion, indem er als Argument die zu beglaubigende Nachricht m und das Resultat der vorhergehenden Operationen nimmt, also $f(m, t, J)$,

- der Verifizierende vergleicht das erhaltene Ergebnis der Komprimierungsfunktion mit dem Titel T, den der Verifizierte zu Beginn des Verifizierungsprozesses ausgehändigt hat,

wobei dieses Verfahren gekennzeichnet ist durch die Tatsache, daß:

a) bei der Ausarbeitung der Vollmacht des Befehlsgebers die Zahl p, die zum Ziehen der p-ten Wurzel der verhüllten Identität dient, groß gewählt wird und wenigsten etwa zehn Bits umfaßt,

b) für die Beglaubigung der Vollmacht das Verfahren nur eine interaktive und probabilistische Bearbeitung aufweist (und nicht eine Wiederholung einer solchen Bearbeitung), wobei die einzige Bearbeitung aus den folgenden Operationen besteht:

- die Zahl D, die der Verifizierende zufällig zieht, ist eine ganze Zahl zwischen 0 und p-1, die Grenzen eingeschlossen,
- die Operation, die der Verifizierte durchführt, um den Zeugen t auszuhändigen, ist das Produkt in dem Ring der ganzen Zahlen modulo N des Elements r, das er selbst zufällig gezogen hat, mit der D-ten Potenz der inversen Vollmacht B ist, wobei der Zeuge also $t = r \cdot B^D$ mod N ist,
- die Operationen, die der Verifizierende durchführt, ist das Produkt im Ring der ganzen Zahlen modulo N der p-ten Potenz des Zeugen t mit der D-ten Potenz der verhüllten Identität J,
- der Verifizierende bildet die Komprimierungsfunktion der Nachricht und des Ergebnisses der vorhergehenden Operationen, also $f(m, t^p J^D$ mod N),
- der von dem Verifizierenden durchgeführte Vergleich bezieht sich zunächst auf das Ergebnis der Komprimierungsfunktion, das er erhalten hat, und auf den Titel T, den der Verifizierte ihm zu Beginn des Verifikationsprozesses ausgehändigt hat, wobei die Beglaubigung der Nachricht in einer einzigen Bearbeitung erhalten wird, sobald es am Ende dieser Bearbeitung eine Entsprechung zwischen allen Bits des von dem Verifizierenden erhaltenen Ergebnisses der Komprimierungsfunktion und des von dem Verifizierten ausgehändigten Titels gibt.

3. Verfahren zum Unterschreiben durch eine Person, wobei diese Person bevollmächtigt sein soll,

a) wobei diese Vollmacht einer Nachrichten unterzeichnenden Person durch ein Verfahren mit einem öffentlichen Schlüssel mit den folgenden Verfahrensschritten erarbeitet wurde:

- ein Bevollmächtigter, der berechtigt ist, Vollmachten auszustellen, wählt zwei erste Zahlen, bildet das Produkt N dieser beiden Zahlen, hält diese Zahlen geheim, wählt eine ganze Zahl p und veröffentlicht N und p;

- für jede unterschreibende Person wird eine numerische Identität I gebildet, die anschließend redundant vervollständigt wird, um ein Wort J zu bilden, das verhüllte Identität genannt wird,
- eine Vollmacht A wird durch den Bevollmächtigten ausgearbeitet, indem die p-te Wurzel der verhüllten Identität in dem Ring der ganzen Zahlen N (A = $J^{1/p}$ mod N) gezogen wird,
- in einen geeigneten Träger, den die unterschreibende Person besitzt, lädt der Bevollmächtigte den Kehrwert modulo N der Vollmacht A, also eine Zahl B, die inverse Vollmacht genannt wird ($B^p J$ mod N = 1),

b) wobei die Unterzeichnung einer Nachricht m durch einen Unterzeichnenden der Identität I aus einem interaktiven und probabilistischem, numerischen Verfahren des Typs mit einem Null-Kenntnis-System besteht, das die folgenden Operationen umfaßt:

- der Unterzeichnende zieht zunächst zufällig eine ganze Zahl r, die zu dem Ring der ganzen Zahlen modulo N gehört,
- der Unterzeichnende erhebt diese ganze Zahl r in die Potenz p modulo N,
- der Unterzeichnende berechnet das Ergebnis einer Komprimierungsfunktion f, indem er als Argument die zu unterzeichnende Nachricht m und die erhaltene Potenz $r^p$ nimmt,
- der Unterzeichnende bildet wenigstens einen Zeugen t, indem er bestimmte Operationen auf r und die inverse Vollmacht B durchführt, wobei diese Operationen mit der Zahl D verbunden sind und in dem Ring der ganzen Zahlen modulo N durchgeführt werden,
- der Unterzeichnende überträgt die Nachricht m, seine Identität I, das Wort D, den Zeugen t, wobei die Gesamtheit eine unterzeichnete Nachricht bildet,

wobei dieses Verfahren gekennzeichnet ist durch die Tatsache, daß:

a) bei der Ausarbeitung der Vollmacht des Unterzeichnenden die Zahl p, die zum Ziehen der p-ten Wurzel der verhüllten Identität dient, groß gewählt wird und wenigsten etwa zehn Bits umfaßt,

b) für die Durchführung der Unterzeichnung der Nachricht

- der Unterzeichnende nur eine ganze Zahl r zufällig zieht, die zum Ring der ganzen Zahlen modulo N gehört,
- die Komprimierungsfunktion als Argumente die Nachricht m und die p-te Potenz von r hat, was eine Zahl D ergibt,
- der einzige Zeuge, der von dem Unterzeichnenden gebildet wird, das Produkt im Ring der ganzen Zahlen modulo N der ganzen Zahl r mit der D-ten Potenz der inversen Vollmacht B ist,
- der Unterzeichnende mit der Nachricht m seine Identität, das Wort D und den Zeugen t liefert.

4. System zum Beglaubigen einer Vollmacht mit einem Null-Kenntnis-System mit:

a) Vorrichtungen zum Ausarbeiten dieser Vollmacht durch ein Verfahren des Typs mit einem öffentlichen Schlüssel, wobei diese Vorrichtungen umfassen:

- bei einem Bevollmächtigten, der berechtigt ist, Vollmachten auszustellen, Vorrichtungen zum Auswählen zweier erster Zahlen, zum Bilden des Produkts N dieser beiden Zahlen, zum Geheimhalten dieser Zahlen, zum Auswählen einer ganzen Zahl p und zum Veröffentlichen von N und p;
- Vorrichtungen zum Bilden für jeden Inhaber einer Vollmacht einer numerischen Identität I und zum redundanten Vervollständigen dieser Identität, um ein Wort J zu bilden, das verhüllte Identität genannt wird,
- Vorrichtungen zum Ausarbeiten einer Vollmacht A, wobei diese Vorrichtungen geeignet sind, die p-te Wurzel der verhüllten Identität in dem Ring der ganzen Zahlen N ($A = J^{1/p} \bmod N$) zu ziehen,
- einen geeigneten Träger mit einem Speicher, in den der Kehrwert modulo N der Vollmacht A, also eine Zahl B, die inverse Vollmacht genannt wird ($B^pJ \bmod N = 1$), geladen wird, wobei diese Zahl B die Vollmacht ist, die es zu beglaubigen gilt,

b) Vorrichtungen zum Beglaubigen der Vollmacht bestehend aus Vorrichtungen zum Ausführen eines interaktiven und probabilistischen, numerischen Verfahrens des Typs mit einem Null-Kenntnis-System, das zwischen einem eine Vollmacht enthaltenden Träger, der "der Verifizierte" genannt wird, und einem Beglaubigungsorgan, das "der Verifizierende" genannt wird, stattfindet, wobei diese Vorrichtungen umfassen:

- eine Vorrichtung in dem Verifizierten, um zunächst zufällig eine ganze Zahl r zu ziehen, die zu dem Ring der ganzen Zahlen modulo N gehört,
- eine Vorrichtung in dem Verifizierten, um diese ganze Zahl in die Potenz p modulo N zu erheben, wobei das Ergebnis Titel T genannt wird,
- Vorrichtungen in dem Verifizierten, um wenigstens einen Teil der Bits des Titels T auszuhändigen,
- Vorrichtungen in dem Verifizierenden, um anschließend zufällig eine Zahl D zu ziehen und den Verifizierten aufzufordern, bestimmte Operationen auf r und auf die inverse Vollmacht B auszuführen, wobei diese Operationen mit der zufällig mittels der Vorrichtungen des Verifizierenden gezogenen Zahl D verbunden sind und in dem Ring der ganzen Zahlen modulo N durchgeführt werden,
- Vorrichtungen in dem Verifizierten, um an den Verifizierenden eine Zahl t, Zeuge genannt, auszuhändigen, die das Resultat dieser Operationen ist,
- Vorrichtungen in dem Verifizierenden, um seinerseits auf dem von dem Verifizierten ausgehändigten Zeugen t und auf der verhüllten Identität J des Verifizierten Operationen durchzuführen, wobei die Operationen ihrerseits auch mit der zufällig von dem Verifizierenden gezogenen Zahl D verbunden sind und in dem Ring der ganzen Zahlen modulo N durchgeführt werden,
- Vorrichtungen in dem Verifizierenden, um das so erhaltene Ergebnis mit den Bits des Titels T, den die Vorrichtungen des Verifizierten zu Beginn des Verifizierungsprozesses ausgehändigt haben, zu vergleichen und die Beglaubigung der Vollmacht zuzulassen, wenn er diese Bits wiederfindet,

wobei dieses System gekennzeichnet ist durch die Tatsache, daß:

a) in den Vorrichtungen zur Ausarbeitung der Vollmacht B die Vorrichtungen zur Auswahl der Zahl p, die zum Ziehen der p-ten Wurzel der verhüllten Identität (J) dient, geeignet sind, eine große Zahl, die wenigstens etwa zehn Bits umfaßt, zu wählen

b) in den Vorrichtungen zur Beglaubigung der Vollmacht die Vorrichtungen geeignet sind, nur eine interaktive und probabilistische Bearbeitung durchzuführen (und nicht eine Wiederholung einer solchen Bearbeitung), wobei diese Vorrichtungen bestehen aus:

- Vorrichtungen, damit die Zahl D, die der Verifizierende zufällig zieht, eine ganze Zahl zwischen 0 und p-1, die Grenzen eingeschlossen, ist,

- Vorrichtungen in dem Verifizierten, um einen Zeugen t auszuhändigen, die geeignet sind, das Produkt in dem Ring der ganzen Zahlen modulo N des zufällig gezogenen Elements r mit der D-ten Potenz der inversen Vollmacht B zu bilden, wobei der Zeuge also $t = r \cdot B^D \bmod N$ ist,

- Vorrichtungen in dem Verifizierenden, die geeignet sind, das Produkt im Ring der ganzen Zahlen modulo N der p-ten Potenz des Zeugen t mit der D-ten Potenz der verhüllten Identität J, also $t^p J^D \bmod N$, zu berechnen,

- Vergleichsvorrichtungen in dem Verifizierenden, die geeignet sind, die Bits des von den Vorrichtungen des Verifizierten ausgehändigten Titels T und die durch die vorhergehende Operation erhaltenen Bits zu vergleichen, wobei die Beglaubigung der Vollmacht in einer einzigen Bearbeitung erhalten wird, sobald alle Bits des von dem Verifizierten ausgehändigten Titels von dem Verifizierenden in $t^p J^D \bmod N$ wiedergefunden werden.

5. System zum Beglaubigen einer Nachricht, wobei diese Nachricht von einem Befehlsgeber kommt, der bevollmächtigt sein soll, mit:

a) Vorrichtungen, die bei einem Befehlsgeber angeordnet sind zum Bilden eines numerischen Wortes B durch ein Verfahren mit öffentlichem Schlüssel, wobei diese Vorrichtungen umfassen:

- bei einem Bevollmächtigten, der berechtigt ist, Vollmachten auszustellen, Vorrichtungen zum Auswählen zweier erster Zahlen, zum Bilden des Produkts N dieser beiden Zahlen, zum Geheimhalten dieser Zahlen, zum Auswählen einer ganzen Zahl p und zum Veröffentlichen von N und p;

- Vorrichtungen zum Bilden für jeden Befehlsgeber einer numerischen Identität I und zum redundanten Vervollständigen dieser Identität, um ein Wort J zu bilden, das verhüllte Identität genannt wird,

- Vorrichtungen zum Ausarbeiten einer Vollmacht A durch den Bevollmächtigten und zum Ziehen der p-ten Wurzel der verhüllten Identität in dem Ring der ganzen Zahlen N ($A = J^{1/p} \bmod N$),

- einen geeigneten Träger, der von dem Befehlsgeber gehalten wird, wobei der Bevollmächtigte in diesen Träger den Kehrwert modulo N der Vollmacht A, also eine Zahl B, die inverse Vollmacht genannt wird ($B^p J \bmod N = 1$), lädt,

b) Vorrichtungen zum Beglaubigen einer Nachricht m, die von dem derart bevollmächtigten Befehlsgeber ausgesandt wird, bestehend aus Vorrichtungen zum Ausführen eines interaktiven und probabilistischen, numerischen Verfahrens des Typs mit einem Null-Kenntnis-System, das zwischen dem Träger des für bevollmächtigt angenommenen Befehlsgebers, der "der Verifizierte" genannt wird, und einem Beglaubigungsorgan, das "der Verifizierende" genannt wird, stattfindet, wobei diese Vorrichtungen umfassen:

- eine Vorrichtung in dem Verifizierten, um zunächst zufällig eine ganze Zahl r zu ziehen, die zu dem Ring der ganzen Zahlen modulo N gehört,

- eine Vorrichtung in dem Verifizierten, um diese ganze Zahl in die Potenz p modulo N zu erheben und ein Ergebnis durch eine Komprimierungsfunktion zu berechnen, wobei als Argument die Nachricht m und $r^p \bmod N$ genommen wird, also $f(m, r^p \bmod N)$, wobei das Ergebnis Titel T genannt wird,

- Vorrichtungen in dem Verifizierten, um wenigstens einen Teil der Bits des Titels T auszuhändigen,

- Vorrichtungen in dem Verifizierenden, um anschließend zufällig eine Zahl D zu ziehen und den Verifizierten aufzufordern, bestimmte Operationen auf r und auf die inverse Vollmacht B anzuwenden, wobei diese Operationen mit der zufällig von dem Verifizierenden gezogenen Zahl D verbunden sind und in dem Ring der ganzen Zahlen modulo N durchgeführt werden,

- Vorrichtungen in dem Verifizierten, um an den Verifizierenden eine Zahl t, Zeuge genannt, auszuhändigen, die das Resultat dieser Operationen ist,
- Vorrichtungen in dem Verifizierenden, um seinerseits auf dem von dem Verifizierten ausgehändigten Zeugen t und auf der verhüllten Identität J des Verifizierten Operationen durchzuführen, wobei die Operationen ihrerseits auch mit der zufällig von dem Verifizierenden gezogenen Zahl D verbunden sind und in dem Ring der ganzen Zahlen modulo N durchgeführt werden,
- Vorrichtungen in dem Verifizierenden zum Bilden einer Komprimierungsfunktion, indem als Argumente die zu beglaubigende Nachricht m und das Ergebnis der vorhergehenden Operationen genommen wird, also f (m, t, J),
- Vorrichtungen in dem Verifizierenden, um die erhaltene Komprimierungsfunktion mit dem Titel T, den der Verifizierte zu Beginn des Verifizierungsprozesses ausgehändigt hat, zu vergleichen,

wobei dieses System gekennzeichnet ist durch die Tatsache, daß:

a) in den Vorrichtungen zur Ausarbeitung der Vollmacht des Befehlsgebers die Zahl p, die zum Ziehen der p-ten Wurzel der verhüllten Identität (J) dient, groß gewählt wird und wenigstens etwa zehn Bits umfaßt,

b) in den Vorrichtungen zur Beglaubigung der Vollmacht die Vorrichtungen geeignet sind, nur eine interaktive und probabilistische Bearbeitung durchzuführen (und nicht eine Wiederholung einer solchen Bearbeitung), wobei diese Vorrichtungen bestehen aus:
- Vorrichtungen, um zufällig als Zahl D eine ganze Zahl zwischen 0 und p-1, die Grenzen eingeschlossen, zu ziehen,
- Vorrichtungen in dem Verifizierten, um einen Zeugen t auszuhändigen, der das Produkt in dem Ring der ganzen Zahlen modulo N des Elements r, das er selbst gezogen hat, mit der D-ten Potenz der inversen Vollmacht B ist, wobei der Zeuge also $t = r \cdot B^D$ mod N ist,
- Vorrichtungen in dem Verifizierenden zum Bilden des Produkts im Ring der ganzen Zahlen modulo N der p-ten Potenz des Zeugen t mit der D-ten Potenz der verhüllten Identität J,
- Vorrichtung in dem Verifizierenden zum Bilden der Komprimierungsfunktion der Nachricht und des Ergebnisses der vorhergehenden Operationen, also f (m, $t^p$, $J^D$ mod N),
- Vergleichsvorrichtungen in dem Verifizierenden, die sich auf das Ergebnis der Komprimierungsfunktion, das die Vorrichtungen des Verifizierenden erhalten haben, und auf den ihm von den Vorrichtungen des Verifizierten ausgehändigten Titel T beziehen, wobei die Beglaubigung der Nachricht in einer einzigen Bearbeitung erhalten wird, sobald am Ende der Bearbeitung es eine Entsprechung zwischen allen Bits des Ergebnisses der von dem Verifizierenden erhaltenen Komprimierungsfunktion und den Bits des von dem Verifizierten ausgehändigten Titels gibt.

6. System zum Unterzeichnen einer Nachricht durch eine Person, wobei diese Person bevollmächtigt sein soll, mit:

a) Vorrichtungen zum Ausarbeiten einer Vollmacht einer Nachrichten unterzeichnenden Person, wobei diese Vorrichtungen ein Verfahren mit öffentlichem Schlüssel ausführen und umfassen:
- bei einem Bevollmächtigten, der berechtigt ist, Vollmachten auszustellen, Vorrichtungen zum Auswählen zweier erster Zahlen, zum Bilden des Produkts N dieser beiden Zahlen, zum Geheimhalten dieser beiden ersten Zahlen, zum Auswählen einer ganzen Zahl p und zum Veröffentlichen von N und p;
- Vorrichtungen zum Bilden für jede unterzeichnende Person einer numerischen Identität I und zum redundanten Vervollständigen dieser Identität, um ein Wort J zu bilden, das verhüllte Identität genannt wird,
- Vorrichtungen zum Ausarbeiten einer Vollmacht A durch den Bevollmächtigten und zum Ziehen der p-te Wurzel der verhüllten Identität in dem Ring der ganzen Zahlen N (A = $J^{1/p}$ mod N),
- einen geeigneten Träger, der von dem Unterzeichnenden gehalten wird, in den der Bevollmächtigte den Kehrwert modulo N der Vollmacht A, also eine Zahl B, die inverse Vollmacht genannt wird ($B^p J$ mod N = 1), laden kann,

b) Vorrichtungen zum Bilden der Unterschrift einer Nachricht m durch einen Unterschreibenden der Identität I, wobei diese Vorrichtungen umfassen:

- Vorrichtungen bei dem Unterzeichnenden, um zufällig wenigstens eine ganze Zahl r zu ziehen, die zu dem Ring der ganzen Zahlen modulo N gehört,

- Vorrichtungen bei dem Unterzeichnenden, um diese ganze Zahl in die Potenz p modulo N zu erheben,

- Vorrichtungen bei dem Unterzeichnenden, um das Ergebnis einer Komprimierungsfunktion f zu berechnen, wobei als Argument die zu unterzeichnende Nachricht m und die erhaltene Potenz $r^p$ genommen wird,

- Vorrichtungen bei dem Unterzeichnenden, um wenigstens einen Zeugen t zu bilden, indem bestimmte Operationen auf r und auf die inverse Vollmacht B ausgeführt werden, wobei diese Operationen mit der zufällig gezogenen Zahl D verbunden sind und in dem Ring der ganzen Zahlen modulo N durchgeführt werden,

- Vorrichtungen bei dem Unterzeichnenden zum Übertragen der Nachricht m, seiner Identität I, des Wortes D und des Zeugen t, wobei die Anordnung eine unterzeichnete Nachricht darstellt,

wobei dieses System gekennzeichnet ist durch die Tatsache, daß:

a) in den Vorrichtungen zur Ausarbeitung der Vollmacht des Unterzeichnenden die Vorrichtungen zur Auswahl der Zahl p, die zum Ziehen der p-ten Wurzel der verhüllten Identität (J) dient, geeignet sind, eine große Zahl zu wählen, die wenigstens etwa zehn Bits umfaßt,

b) in den Vorrichtungen zur Durchführung der Unterzeichnung der Nachricht:

- die Vorrichtungen des Unterzeichnenden nur eine ganze Zahl r zufällig ziehen, die zum Ring der ganzen Zahlen modulo N gehört,

- die Komprimierungsvorrichtungen mit Argumenten arbeiten, die die Nachricht m und die p-te Potenz von r sind, was eine Zahl D ergibt,

- die Vorrichtungen zum Bilden eines einzigen Zeugen durch den Unterzeichnenden geeignet sind, in dem Ring der ganzen Zahlen modulo N das Produkt der ganzen Zahl r mit der D-ten Potenz der inversen Vollmacht B zu bilden,

- die Vorrichtungen des Unterzeichnenden mit der Nachricht m, seine Identität, das Wort D und den Zeugen t

liefern.

$J = Red(I)$ $\quad\quad\quad\quad\quad JB^2 \bmod N = 1$

FIG. 1

$Ii = Div(I,i);$ $\quad\quad J_i = Red(Ii);$ $\quad\quad Bi^2 Ji \bmod N = 1$

$i = 1, 2, \ldots n$

FIG. 2

28

m,I

$\text{r}$ ? $\in \{0,1,\ldots N-1\}$

$T = f(m, \ r^2 \ \text{mod} \ N)$

T

$d \in \{0,1\}$

d

$t = r \cdot B^d \ \text{mod} \ N$

t

$f(m, \ t^2 j^d \ \text{mod} \ N) \overset{?}{=} T$

# FIG. 3

m, I

$\text{r}$ ? $\in \{0,1,\ldots N-1\}$

T

$\text{D}$ ? $\in \{0,1\}^n$

D

$t = r \cdot B_1^{d1} \ldots B_n^{dn}$

t

$f(m, \ t^2 J_1^{d1} \ldots J_n^{dn} \ \text{mod} \ N) \overset{?}{=} T$

# FIG. 4

FIG. 5

$$\text{\textcircled{$r_1$}} \quad \text{\textcircled{$r_2$}} \cdots \text{\textcircled{$r_k$}} \text{?}$$

$$f(m, r_1^2 \bmod N, \ldots, r_k^2 \bmod N) = D = d_1 d_2 \ldots d_k$$

$$t_i = r_i \, B^{d_i} \bmod N$$

$$M = m, I, d_1 \ldots d_k, t_1 \ldots t_k$$

$$f(m, t_1^2 \, J^{d1} \bmod N, \ldots \, t_k^2 J^{dk} \bmod N) \overset{?}{=} d1 \ldots dk$$

FIG. 6

$$\text{\textcircled{$r_1$}} \quad \text{\textcircled{$r_2$}} \cdots \text{\textcircled{$r_k$}} \text{?}$$

$$D = d_{11} \ldots d_{1n}, \, d_{21} \ldots d_{2n} \ldots, d_{k1} \ldots d_{kn} \qquad (kn \text{ bits})$$

$$= f(m, r_1^2 \bmod N, \ldots r_k^2 \bmod N)$$

$$t_1 = r_1 B_1^{d11} \, B_2^{d12} \ldots Bn^{d1n} \bmod N$$

$$\underline{\qquad \cdot \qquad \cdot \qquad \cdot \qquad \cdot \qquad \cdot}$$

$$t_i = r_i B_1^{di1} \, B_2^{di2} \ldots Bn^{din} \bmod N$$

$$\underline{\qquad \cdot \qquad \cdot \qquad \cdot \qquad \cdot \qquad \cdot}$$

$$t_k = r_k \cdot B_1^{dk1} B_2^{dk2} \ldots B_n^{dkn} \bmod N$$

$$M = m, I, D, t_1 \, t_2 \ldots t_k$$

$$f(m, t_1^2 J_1^{d11} \ldots J_n^{d1n} \bmod N, \ldots t_k^2 \, J_1^{dk1} \ldots Jn^{dkn} \bmod N) \overset{?}{=} D$$

J=Red(I) $\qquad$ $B^P \cdot J \bmod N = 1$

$\xrightarrow{\hspace{3cm} I \hspace{3cm}}$

ⓡ ? $r \in \{0,1,\dots N-1\}$

$T = r^P \bmod N$ $\xrightarrow{\hspace{2cm} T \hspace{2cm}}$

ⓓ ? $D \in \{0,1,\dots p-1\}$

$\xleftarrow{\hspace{2cm} D \hspace{2cm}}$

$t = r \cdot B^D \bmod N$

$\xrightarrow{\hspace{2cm} t \hspace{2cm}}$

$t^P \cdot \mathbf{J}^D \bmod N \overset{?}{=} T$

# FIG. 7

$\xrightarrow{\hspace{3cm} m,I \hspace{3cm}}$

ⓡ ? $r \in \{0,\dots N-1\}$

$T = f(m,\ r^P \bmod N)$ $\xrightarrow{\hspace{2cm} T \hspace{2cm}}$

ⓓ ? $D \in \{0,\dots p-1\}$

$\xleftarrow{\hspace{2cm} D \hspace{2cm}}$

$t = r \cdot B^D \bmod N$

$\xrightarrow{\hspace{2cm} t \hspace{2cm}}$

$f(m, t^P J^D \bmod N) \overset{?}{=} T$

# FIG. 8

$$\text{FIG 9} \left\{ \begin{array}{l} \textcircled{r} \quad ? \\[2em] D = f(m, r^P \bmod N) \\[2em] t = r \cdot B^D \bmod N \\[2em] M = m, I, D, t \\[2em] f(M, t^P J^D \bmod N) \overset{?}{=} D \end{array} \right.$$

FIG. 10